# EUROPEAN PATENT SPECIFICATION

(11) **EP 2 792 036 B1**
(45) Date of publication and mention of the grant of the patent: **06.07.2016**
(21) Application number: 12799200.6
(22) Date of filing: 12.12.2012
(51) Int. Cl.: H02B 5/00, H02B 5/06

(54) **SEALED AND GAS INSULATED HIGH VOLTAGE CONVERTER ENVIRONMENT FOR OFFSHORE PLATFORMS**
ABGEDICHTETE UND GASISOLIERTE HOCHSPANNUNGSUMRICHTERUMGEBUNG FÜR OFFSHORE-PLATTFORMEN
ENVIRONNEMENT DE CONVERTISSEUR HAUTE TENSION RENDU ÉTANCHE ET ISOLÉ AU GAZ POUR PLATEFORMES EN MER

(30) Priority: 13.12.2011 WO PCT/EP2011/072496
(43) Date of publication of application: 22.10.2014
(73) Proprietor: ABB Technology AG, 8050 Zürich (CH)
(72) Inventor: TERWIESCH, Peter, 68165 Mannheim (DE); MAHDIZADEH, Navid, CH-5400 Baden (CH); HYTTINEN, Mats, S-771 43 Ludwika (SE); ERIKSSON, Göran, S-723 35 Västeras (SE); KRAMER, Axel, CH-5430 Wettingen (CH); NORRGA, Staffan, S-118 28 Stockholm (SE); PAUL, Thomas Alfred, 8820 Wädenswil (CH); RIECHERT, Uwe, CH-8192 Glattfelden (CH); SVENSSON, Jan R., S-723 46 Västeras (SE); DIJKHUIZEN, Frans, S-726 31 Skultuna (SE); INGOLD, Mathias, CH-8103 Unterengstringen (CH)
(74) Representative: ABB Patent Attorneys
(86) International application number: PCT/EP2012/075243
(87) International publication number: WO 2013/087700

(56) References cited:
- WO-A1-93/17488
- FR-A1- 2 955 970
- US-A1- 2003 235 026
- ABB: "Valhall re-development project, Power from Shore", , 17 March 2010 (2010-03-17), pages 1-5, XP055033933, Retrieved from the Internet: URL:http://www05.abb.com/global/scot/scot2 21.nsf/veritydisplay/5edd0cfa28106e4ac1257 7f40066149f/$file/PID1193805.pdf [retrieved on 2012-07-26]

## Description

The present invention relates to a converter building according to the preamble of claim 1, as e.g. comprised in an HVDC station, an HVAC station or an HVAC/HVDC station, in particular an HVDC onshore or offshore station.

HVDC (high-voltage, direct current) electric power transmission systems use direct current for the bulk transmission of electrical power. In particular for the transmission over long distances, HVDC systems suffer lower electric losses than alternating current (AC) systems.

Electric energy generated in e.g. large wind farms is typically collected in AC offshore stations and transmitted to HVDC offshore stations where the conversion from AC to DC is performed.

The platform of these stations comprises a converter building in which the respective electrical active parts are arranged. The size and weight of the converter building and of the platform, respectively, are related to the power capacity of the station.

For example, the platform of a 1000 MW HVDC station has a weight of roughly 10'000 tons. The volume of the respective converter building is typically in the order of several 10'000 m³. In a conventional Dolwin converter, for example, one valve hall alone typically has a size in the order of about 10'000 m³.

At present such platforms must be large in size in order to handle the required amounts of electric power. High voltages are needed to keep the currents, electric losses and conductor or cable cross-sections sufficiently low. High voltages need long insulation distances and thus require a lot of space, if air is used as the insulation medium. Air, while having the advantage of being available ubiquitously at no cost, has a rather low insulation performance. Furthermore, installation of a platform comprising a converter building of this weight and size may require cranes with extremely high capacity which are rarely available. Thus, conventional HVDC offshore stations suffer from their enormous size and weight.

A reduction in size and weight of the platform and the converter building is highly desirable to simplify the complexity of installation, operation, maintenance, and deconstruction of conventional stations.

The invention starts from the article by Bo Westman et al., "Valhall Re-Devlopment Project, Power from Shore", p.1-5, March 17th 2010, which discloses an offshore ac system supplied with electric power to a new production and hotel platform through HVDC (High Voltage Direct Current) cable transmission using the VSC (Voltage Source Converter) technology. An offshore module or building contains the high voltage equipment. A ventilation system inside the module or building protects the high voltage equipment against salt and humid air and provides over-pressure to protect against possible presence of gas in the area. The HVDC module has two stores with ac filters and phase reactors on the top floor and the converter valves and dc equipment below. The converter transfomers are located in a separate room. The size of the HVDC module is 17 x 39 x 13.6 m³ (width x length x height) and includes, besides the high voltage equipment, the auxiliary systems, mainly the valve cooling system, the ventilation system and the auxiliary power system. There are also two electrical rooms for the HVDC control and protection equipment and for communication with the platform control system. These indoor installations inside the module building assure that the main circuit equipment is exposed to lower environmenal requirements than an outdoor installation, which allows for a more compact design. Furthermore, the power from shore saves space and weight on the platform.

The object of the present invention is thus to provide a converter building, in particular for the use for an HVDC station, an HVAC station or an HVAC/HVDC station, which is smaller in size and weight than conventional converter buildings and thus allows for a simpler and ultimately less costly installation of the station.

The object is solved by the converter building, the method and the use according to the independent claims. Preferred embodiments are given in the dependent claims.

The converter building of the present invention comprises at least one room (also designated a "hall"), which has a solid room wall enclosing an interior space, in which an electrical active part is contained.

According to the invention, the room wall has at least one opening which is sealable, preferably a door and more preferably a door having gas-tight sealing means. The opening is designed such that it allows a human to enter the interior space. Thus, shape and dimensions of the opening are such that a human can pass through it.

The room wall encloses the interior space in a gas-tight manner when the opening is sealed. This allows the interior space to contain a dielectric insulation medium comprising a dielectric insulation component C1 other than air. Thereby, sealing serves for reducing, minimizing or even avoiding leakage of the dielectric insulation component C1 other than air to the outside and thus ultimately to the environment. The sealing means need not necessarily be tight against higher over-pressures, such as several bars.

The term "converter building" is in the context of the present invention to be understood as a construction having the size of a house or a plant.

In this converter building, one or more rooms are comprised, which likewise have the size of a room in a house or of a hall in a plant. Particularly, the term "room" is not to be interpreted as meaning an encapsulation, as for a gas-insulated substation (GIS), but in the context of the present invention refers to a room of much greater dimensions, which - as such - can for example even comprise a GIS.

The term "solid room wall" refers to the wall surrounding and enclosing the interior space of the room. It can be made of any material suitable for a converter building, and in particular can comprise a construction material, such as concrete and/or an open metal construction. The room may or may not comprise a window, for example a glass window or a plastic window.

The term "opening" relates to a passage in the room wall having a shape and dimension that allows a human to pass through the opening and thus to enter the interior space of the room.

The term converter building is also to be understood broadly to encompass a building for housing any electrically active parts for generally converting electrical energy, in particular for generating, transmitting, distributing or transforming electrical energy. For example, such converting of electrical energy can comprise, inter alia, conversion of electrical energy between alternating current (AC) and direct current (DC), between different voltage levels, between different AC-frequencies, between different locations, or between electrical energy and other forms of energy, for example thermal and electrical energy or between electrical and mechanical energy. Converter building thus can encompass also buildings for housing generators, transformers, electrically rotating machines, and the like.

Converter building shall also encompass any buildings being equipped with at least one not-encapsulated electrical parts, such as life-tank apparatuses or generally apparatuses designed for or like in conventional air-insulated substations. Therefore, the converter building according to the invention may also be or comprise or be comprised in a hybrid or non-encapsulated in-house gas-insulated substation, with the converter building comprising at least one room having a solid room wall enclosing an interior space and an electrical active part, i.e. at least one electrical active part, contained in said interior space, the room wall having at least one opening, which is designed such that it allows a human to enter the interior space, wherein the opening is sealable, the room wall encloses the interior space in a gas-tight manner when the opening is sealed, and the interior space contains a dielectric insulation medium comprising a dielectric insulation component C1 other than air. In particular, the electrical active parts can be designed as non-encapsulated electrical active parts and, in particular, like conventional air-insulated components, but can be reduced substantially in size and/or with respect to insulation distances due to the higher insulation capability of the specific dielectric insulation medium compared to pure air. Such components can thus be arranged inside the interior space of the openable and sealable room of the converter building with reduced clearance distances, i.e. insulation distances, for example between different phases or between phase and ground, compared to conventional air-insulated substations.

Thus, in an embodiment the building, in particular converter building, comprises or is or is comprised in a medium and/or high voltage substation comprising at least one non-encapsulated gas-insulated electrical active part.

Throughout this application, the term "non-encapsulated" is to be understood broadly as an electrical active part that is exposed to and insulated by, in particular in operation requires insulation by, the dielectric insulation medium and in particular the dielectric insulation component C1.

The term "electrical active part" is to be understood as any electrical component used for generating, transmitting, distributing or using electrical energy, and in particular exemplarily relates to any such component present in a converter station, a detailed specification of which components is given below. In particular, the term "electrical active part" encompasses - and according to a preferred embodiment means - a non-encapsulated electrical active part. The term "electrical active part" encompasses medium voltage electrical active parts and/or high voltage electrical active parts and/or heavy-current carrying electrical active parts, preferably high voltage electrical active parts, more preferably high voltage electrical active parts above 72 kV. The term "medium voltage" as used herein refers to a voltage in the range of 1 kV to 72 kV, whereas the term "high voltage" refers to a voltage of more than 72 kV. Heavy current is to be understood as currents for example above 1 kA, and in particular above 10 kA. In particular, "electrical active part" can encompass a medium voltage electrical active part operated at medium voltage and with heavy currents, such as in a generator circuit breaker.

According to a preferred embodiment, the dielectric insulation medium (comprising the dielectric insulation component C1), which is contained in the interior space of the room, is not or is not solely contained in an encapsulation.

In general, the dielectric insulation medium C1 has a higher dielectric strength than air. It typically has an atmospheric boiling point of less than 60°C, a low Global Warming Potential (GWP) of less than 700 (over a 100 year time horizon) and zero Ozone Depletion Potential (ODP).

In the context of the present invention, the term "boiling point" is to be understood as boiling point at atmospheric pressure, i.e. at about 1 bar.

The dielectric insulation component C1 is typically at least partially in gaseous phase at operational conditions. It is preferably non-corrosive, non-explosive, thermally stable up to 140°C and non-toxic (or has a low toxicity level).

In embodiments, the dielectric insulation medium comprises gas and preferably is gaseous under operating conditions of the building or converter building. As well in further embodiments, the dielectric insulation component C1 comprises gas and preferably is gaseous under operating conditions of the building or converter building.

Due to the fact that the room wall encloses the interior space in a gas-tight manner when the opening is sealed, there is no leakage of the insulation medium comprising insulation component C1 out of the interior space when the converter building is under operation.

Given the improved dielectric insulation achieved by using insulation component C1, the insulation and clearance distances can be reduced compared to respective distances in a conventional converter building of e.g. an HVDC offshore station. Ultimately, this allows for a substantial reduction in the overall size and weight and consequently for a simpler and less costly installation.

Particularly, the dielectric insulation medium is thereby breathable without health risk at least for a certain time, in particular is breathable without health risk when using a gas mask or even when not using a gas mask, and preferably comprises air or an air component.

According to a further exemplary embodiment, a door is attributed to the at least one opening, said door being moveable, in particular pivotable or slidable, with respect to the opening from a first state, in which the opening is open, to a second state, in which the opening is closed, and vice versa.

Any door suitable for the purpose of the present invention can be used. In embodiments, the room of the building or converter building can be equipped for example with a hinged door with a horizontal or vertical pivoting axis, a sliding door, in particular a pocket door, or a rotating door. The door is closable either with or without a human having entered the interior space, more particularly from the inside (i.e. the interior space) and/or from the outside. The closing of the door can be carried out manually and/or automatically. In a preferred embodiment, the door is a double door or an air lock door or a revolving door which allows entrance and leave of a person via a sluice with only exceptionally little loss of the dielectric insulation medium, and in particular little loss of pressure and/or little loss of concentration of the dielectric insulation component C1.

In embodiments, the door is, in particular the door has sealing means, for preventing humidity, such as humid air, to enter the room from the outside. The sealing means for preventing entry of humidity into the room can be, but need not be, the same as the sealing means for preventing outflow of the dielectric insulation medium or of the dielectric insulation component C1 out of the room.

As mentioned, the opening is sealable. This means that sealing means are attributed to the opening for providing a gas-tight closure, thus ultimately allowing the interior space to be enclosed in a gas-tight manner. Any kind of sealing means, which is suitable for the purposes of the present invention, can be used, in particular a gasket, more particularly an O-ring or any other gasket made of an elastomer. The level of gas-tightness shall be such that leakage of the dielectric insulation component C1 other than air is sufficiently reduced and a concentration of the dielectric insulation component C1 is maintained for keeping the dielectric insulation in the building or room above a critical threshold level. This threshold level shall be higher than the dielectric withstand capability of air, in particular of ambient air or of dry air, during a sufficiently long time period, in particular for example during an operating time interval without refilling over a day, a week or a month.

In addition, during time intervals when the opening is used by a person to enter or leave the room or building, a slight loss or leakage of the dielectric insulation component C1 to the outside and ultimately to the environment is tolerable. In particular, the loss in dielectric insulation performance is even tolerable, if a typical or reasonable or pre-determined duration and number of door openings is performed during the operating time interval until refilling, i.e. between refilling time instances.

In particular, the sealing means are arranged between the surface of the room wall in a region surrounding the opening and the surface of the door. If the sealing means are in the form of an O-ring, for example, it is seated in a groove, e.g. in the surface of the room wall surrounding the opening. During closing of the opening, the O-ring is compressed by the surface of the door when being moved towards the opening.

In addition or alternatively to tolerating such slight leakage by opening the door, the allowable leakage by opening the door can actively be compensated for by refilling the dielectric insulation medium and in particular the dielectric insulation component C1. As outlined herein, the room can be equipped with refilling means, such as injection means or spraying nozzles - in particular in combination with a fan or circulation means - as disclosed herein, for refilling the dielectric insulation medium and in particular the dielectric insulation component C1.

In embodiments, the refilling means can be activated in regular time intervals, and/or by opening and/or closing the door, and/or in a controlled manner. Activation in regular time intervals can be done based on pre-determined regular leakage rates, when the door is closed, and on pre-determined inspection or maintenance leakage rates, when the door is opened for a person to enter or leave the room. Activation in a controlled manner can comprise automatic activation upon opening and/or closing the door, activation as a function of a number of door openings and/or as a function of a total door-open time during which the door has been open or has not been closed, activation each time after the door has been closed again, and/or activation after the person has left the room again, i.e. when no person is present in the room.

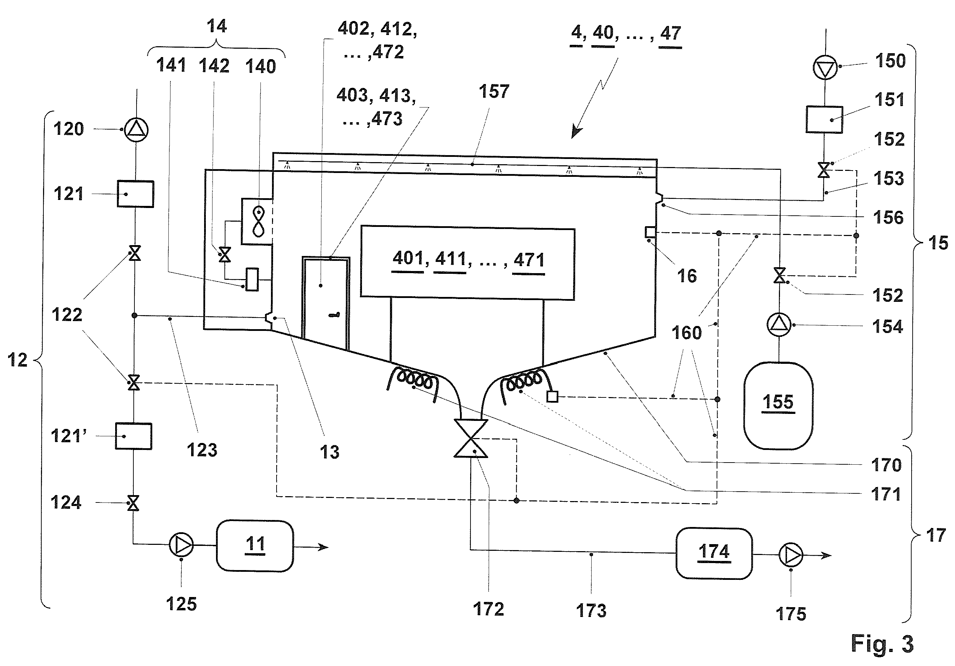

Activation in a controlled manner requires monitoring means for sensing the dielectric insulation medium inside the room and control means for regulating the dielectric insulation medium to a desired operating range. The monitoring means may be or comprise or be comprised in the monitoring means disclosed hereinafter, in particular in connection with Fig. 3. The control means may be or comprise be comprised in the controlling means disclosed hereinafter, in particular in connection with Fig. 3.

In embodiments, control means for automatic activating the refilling means may be such, that refilling is activated when a threshold level of required dielectric strength of the dielectric insulation medium, in particular a threshold concentration of the dielectric insulation component C1, is approached or undershot. Alternatively or in addition, the refilling means can be activated manually, for example during every instance when the door has been opened, or semi-manually, wherein opening and/or closing the door activates the refilling means.

In an embodiment, the refilling means can for example and inter alia be arranged in close neighbourhood to the door. This allows refilling the dielectric insulation medium and in particular the dielectric insulation component C1 at the location where the relatively largest losses occur. In alternative or additional embodiments, the refilling means can for example and inter alia be arranged in close neighbourhood of the at least one non-encapsulated electrical active part, and preferably in greater distance or greatest possible distance from the door. This allows maintaining the dielectric strength at the non-encapsulated component as high as possible while keeping the exposure of personnel to the dielectric insulation medium and in particular the dielectric insulation component C1 as low as possible.

In the context of this invention, it is emphasized once more that opening the door and having a person entering the room housing the electrical active parts is possible with the electrical active parts, in particular the at least one non-encapsulated electrical active part, being in operation, i.e. being under medium and/or high voltage, and/or under currents or heavy currents. As well, opening the door and having a person entering the room housing the electrical active parts is also possible when the electrical parts are inactivated, i.e. out of operation, but the dielectric insulation medium and in particular the dielectric insulation component C1 has not or not yet been evacuated.

Preferably, the dielectric insulation medium and in particular the dielectric insulation component C1 is or are chosen such that evacuation of the room is not required at all, also not during a person being present in the room, as may be required for inspection or maintenance purposes.

It is understood that the converter building can - apart from the above mentioned room, the interior space of which comprises the specific insulation medium with the insulation component C1 - also comprise at least one room which is solely filled with (dry) air. This is preferably the case for rooms which require frequent maintenance and/or for which only a relatively small reduction of the volume by using the specific insulation medium can be achieved.

According to a preferred embodiment, the dielectric insulation component C1 is an organofluorine compound, i.e. an organic chemical compound containing carbon and fluorine atoms, at least some of which being bonded in a carbonfluorine bond.

According to a particularly preferred embodiment, the dielectric insulation component C1 is selected from the group consisting of a fluoroketone, a hydrofluoro monoether and mixtures thereof.

In alternative or additional embodiments, the dielectric insulation component C1 is selected from the group consisting of: perfluoroethers, perfluoromonoethers, perfluorodiethers, perfluoropolyethers; linear, branched or cyclic perfluoroethers; linear, branched or cyclic perfluoropolyethers; and mixtures thereof; and mixtures with any other dielectric insulation component C1, in particular with at least one of the fluoroketones and hydrofluoro monoethers.

It is further preferred that the insulation medium comprises in addition to the dielectric insulation component C1 at least one further dielectric insulation component C2, ..., Cn, said further dielectric insulation component C2, ..., Cn being air or an air component, in particular being selected from the group consisting of: nitrogen, oxygen, carbon dioxide, noble gases, and mixtures thereof. The insulation medium is typically a mixture of the insulation component C1 with air, more particularly dry air. In analogy to the above, the further dielectric component C2, ..., Cn is preferably present in amounts in which it is non-toxic when inhaled. If there are concerns regarding the toxicity of the insulation medium, the interior space can be evacuated prior to the entering - as will be shown in detail below - or can be accessed with a gas mask to protect the wearer from inhaling the insulation medium.

According to a particularly preferred embodiment, the insulation medium is devoid of sulphur hexafluoride SF₆. The safety requirements, in particular health safety requirements, imposed on electrical devices using SF₆ are thus avoided.

With regard to the use of a fluoroketone, it is particularly preferred that it contains from 4 to 12 carbon atoms, preferably from 5 to 7 carbon atoms, most preferably exactly 5 or exactly 6 carbon atoms.

With regard to the use of a hydrofluoro monoether, it is particularly preferred that it contains at least 3 carbon atoms, more preferably exactly 3 or exactly 4 carbon atoms.

The fluoroketones and hydrofluoro monoethers mentioned above not only have high insulation capabilities, in particular a relatively high dielectric strength, they are in general also non-toxic (or have a very low toxicity level) and are non-corrosive, non-flammable and non-explosive. Said compounds thus comply fully with safety requirements, as prescribed for the use in e.g. an HVDC offshore station.

Given the non-toxicity or low toxicity level of the compounds of the above mentioned group, no complete removal of the insulation component C1 from the interior space has to be ensured, when the interior space has to be entered e.g. for maintenance purposes, since residues of the insulation component will be harmless to the operator exposed to it.

The compounds of the above mentioned group further have a low GWP and an ODP of 0; they are thus favourable from an environmental perspective. Even in the case that leakage out of the interior space occurs, the compounds have no negative impact on the atmosphere.

The term "fluoroketone" as used herein shall be interpreted broadly and shall encompass both perfluoro-ketones and hydrofluoroketones. The term shall also encompass both saturated compounds and unsaturated compounds including double and/or triple bonds between carbon atoms. The at least partially fluorinated alkyl chain of the fluoroketones can be linear or branched and can optionally form a ring.

The term "fluoroketone" shall encompass compounds that may comprise in-chain heteroatoms, i.e. at least one heteroatom replacing a carbon atom. In exemplary embodiments the fluoroketone shall have no in-chain heteroatom.

The term "fluoroketone" shall also encompass fluorodiketones having two carbonyl groups or fluoroketones having more than two carbonyl groups. In exemplary embodiments, the fluoroketone shall be a fluoromonoketone.

According to a preferred embodiment, the fluoroketone is a perfluoroketone. It is preferred that the fluoroketone has a branched alkyl chain. It is also preferred that the fluoroketone is fully saturated.

According to a further preferred embodiment, the fluoroketone has exactly five carbon atoms and is selected from the group consisting of the compounds defined by the following structural formulae in which at least one hydrogen atom is substituted with a fluorine atom:

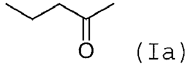

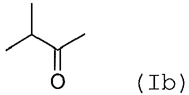

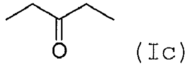

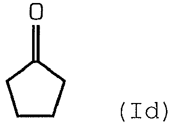

Compared to fluoroketones having a greater chain length with more than 5 carbon atoms, fluoroketones containing 5 carbon atoms have the advantage of a relatively low boiling point, allowing to have a relatively high molar fraction of such 5-carbon fluoroketones in the insulation medium and avoiding the problem of liquefaction even at low temperatures.

Fluoroketones containing 5 or more carbon atoms are further advantageous, because they are generally non-toxic.

Further, the fluoroketones having a branched alkyl chain are generally preferred, because their boiling points are lower than the boiling points of the corresponding compounds (i.e. compounds with same molecular sum formula) having a straight alkyl chain.

In a particularly preferred embodiment, the fluoroketone has the molecular formula C₅F₁₀O, i.e. is fully saturated without any double or triple bond between carbon atoms. The fluoroketone may more preferably be selected from the group consisting of 1,1,1,3,4,4,4-heptafluoro-3-(trifluoromethyl)butan-2-one (also named decafluoro-3-methylbutan-2-one), 1,1,1,3,3,4,4,5,5,5-decafluoropentan-2-one, 1,1,1,2,2,4,4,5,5,5-decafluoropentan-3-one, 1,1,1,4,4,5,5,5,-octafluoro-3-bis(trifluoromethyl)-pentan-2-one; and most preferably is 1,1,1,3,4,4,4-heptafluoro-3-(trifluoromethyl)butan-2-one.

Among the fluoroketones containing exactly 5 carbon atoms, 1,1,1,3,4,4,4-heptafluoro-3-(trifluoromethyl)butan-2-one, here briefly cited by the generic term "C5-ketone" (=fluoroketone containing exactly 5 carbon atoms), with molecular formula CF₃C(O)CF(CF₃)₂ or C₅F₁₀O, has been found to be particularly preferred because it has the advantages of a high dielectric insulation performance, in particular in mixtures with a dielectric carrier gas component, a very low GWP and a low boiling point. It has an ozone depletion potential of 0 and is practically non-toxic. 1,1,1,3,4,4,4-heptafluoro-3-(trifluoromethyl)butan-2-one can be represented by the following structural formula (I) :

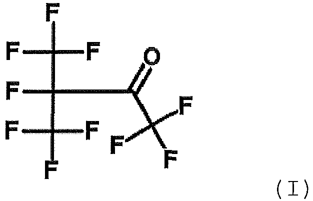

According to a further preferred embodiment, the fluoroketone has exactly six carbon atoms and is at least one compound selected from the group consisting of the compounds defined by the following structural formulae in which at least one hydrogen atom is substituted with a fluorine atom: 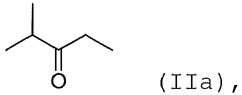 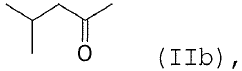 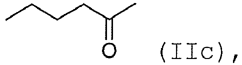 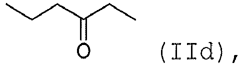 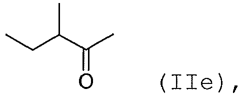 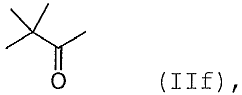 and

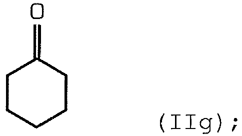

According to a further preferred embodiment, the fluoroketone has exactly seven carbon atoms and is at least one compound selected from the group consisting of the compounds defined by the following structural formulae in which at least one hydrogen atom is substituted with a fluorine atom: 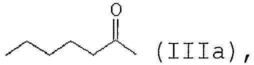 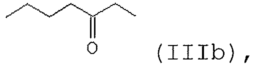 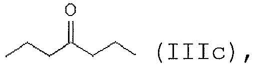 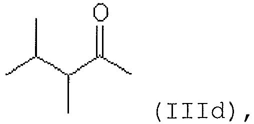 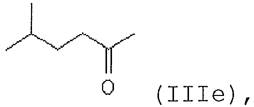 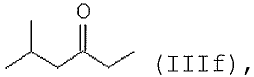 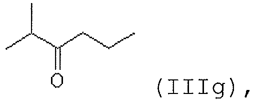 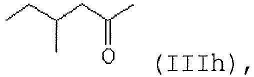 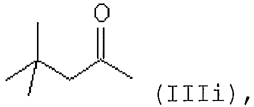 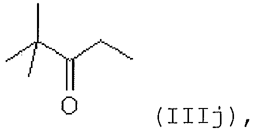 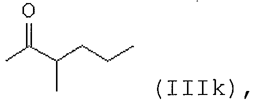 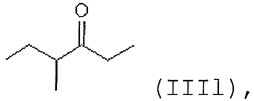 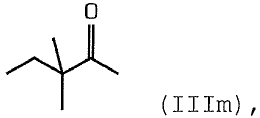 and 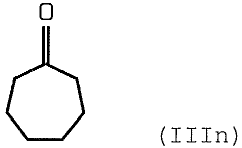 named dodecafluoro-cycloheptanone.

The present invention encompasses each compound or combination of compounds selected from the group consisting of the compounds according to structural formulae Ia to Id, IIa to IIg, IIIa to IIIn.

A fluoroketone containing exactly 6 carbon atoms is particularly preferred for the purpose of the present invention; such a fluoroketone is non-toxic and has outstanding margins for human safety.

In particular, the fluoroketone has the molecular formula C₆F₁₂O. More preferably, the fluoroketone is selected from the group consisting of 1,1,1,2,4,4,5,5,5-nonafluoro-2-(trifluoromethyl)pentan-3-one (also named dodecafluoro-2-methylpentan-3-one), 1,1,1,3,3,4,5,5,5-nonafluoro-4-(trifluoromethyl)pentan-2-one (also named dodecafluoro-4-methylpentan-2-one), 1,1,1,3,4,4,5,5,5-nonafluoro-3-(trifluoromethyl)pentan-2-one (also named dodecafluoro-3-methylpentan-2-one), 1,1,1,3,4,4,4-heptafluoro-3-bis-(trifluoromethyl)butan-2-one (also named dodecafluoro-3,3-(dimethyl)butan-2-one), dodecafluorohexan-2-one and dodecafluorohexan-3-one, and particularly is the mentioned 1,1,1,2,4,4,5,5,5-nonafluoro-2-(trifluoromethyl)pentan-3-one.

1,1,1,2,4,4,5,5,5-Nonafluoro-2-(trifluoromethyl)pentan-3-one (also named dodecafluoro-2-methylpentan-3-one or perfluoro-2-methyl-3-pentanone) can be represented by the following structural formula (II):

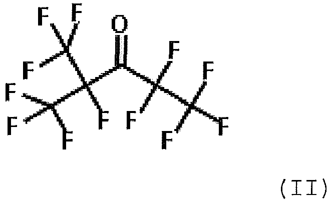

1,1,1,2,4,4,5,5,5-Nonafluoro-4-(trifluoromethyl)pentan-3-one, here briefly cited by the more generic term "C6-ketone" (=fluoroketone comprising exactly 6 carbon atoms), with molecular formula C₂F₅C(O)CF(CF₃)₂ has been found to be particularly preferred because of its high insulating properties and its extremely low GWP. It has an ozone depletion potential of 0 and is non-toxic (LC50 of about 100'000 ppm). Thus, the environmental impact is much lower than with conventional insulation gases, and at the same time outstanding margins for human safety are achieved.

1,1,1,2,4,4,5,5,5-Nonafluoro-4-(trifluoromethyl)pentan-3-one is particularly useful when the converter building of the present invention is used in an HVDC station, an HVAC station or an HVAC/HVDC station, in particular an HVDC onshore or offshore station, as in these applications the operational temperature is such that a sufficient fraction of the compound is in gaseous phase during operation.

The term "hydrofluoro monoether" as used in the context of the present invention, refers to a compound having one and only one ether group, said ether group linking two alkyl groups, which can be, independently from each other, linear or branched.

The term "hydrofluoro monoether" as used in the context of the present invention is further to be understood as a compound which is partially hydrogenated and partially fluorinated.

By using a hydrofluoro monoether, an insulation medium having high insulation capabilities, in particular a high dielectric strength (or breakdown field strength), and at the same time a low GWP, can be achieved.

Also, the insulation medium is chemically and thermally stable to temperatures above 140°C, non-toxic (or has a low toxicity level), non-corrosive and non-explosive.

Hydrofluoro monoethers can participate in a very efficient tropospheric removal process which involves hydrogen abstraction by an OH radical. Ultimately, this results in a relatively low atmospheric lifetime of the compound.

Due to their relatively low atmospheric lifetime, hydrofluoro monoethers also have a relatively low GWP, as already mentioned. Specifically, an insulating medium having a GWP of less than 1'000 over 100 years, more specifically of less than 700 over 100 years, can be obtained.

Apart from their relatively low atmospheric lifetime, hydrofluoro monoethers are also devoid of halogen atoms that play a role in the ozone destruction catalytic cycle, namely Cl, Br or I. Therefore, the dielectric insulation medium comprising a hydrofluoro monoether has the further advantage of zero ODP, which is very favourable from an environmental perspective.

Preferably, the hydrofluoro monoether of the present invention contains at least 3 carbon atoms.

Hydrofluoro monoethers containing at least 3 carbon atoms generally have a boiling point of higher than -20°C at ambient pressure. The preference for a hydrofluoro monoether containing at least 3 carbon atoms and thus having a relatively high boiling point of more than -20°C is based on the finding that a higher boiling point of the hydrofluoro monoether generally goes along with a higher dielectric strength.

According to a preferred embodiment of the present invention, the hydrofluoro monoether contains exactly 3 or exactly 4 carbon atoms, most preferably exactly 3 carbon atoms.

More particularly, the hydrofluoro monoether is thus at least one compound selected from the group consisting of the compounds defined by the following structural formulae in which a part of the hydrogen atoms is substituted by a fluorine atom: 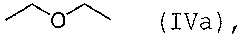 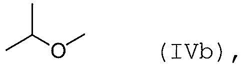 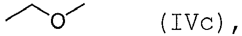 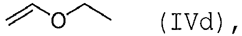 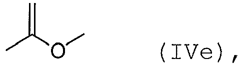 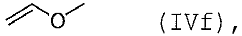 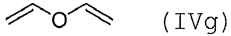 and

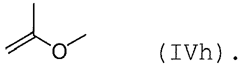

By using a hydrofluoro monoether containing exactly 3 or exactly 4 carbon atoms, a gaseous insulation medium can be achieved, which does not liquefy under typical operational conditions and which at the same time has a relatively high dielectric strength.

Furthermore, by using a hydrofluoro monoether containing exactly 3 or exactly 4 carbon atoms, an insulating medium can be achieved, which is non-explosive and thus complies even with high safety requirements.

In summary, by using a hydrofluoro monoether containing exactly 3 or exactly 4 carbon atoms a non-explosive dielectric insulation medium having a high dielectric strength relative to air and having at the same time a boiling point of less than 30°C can be achieved. This is of particular relevance for the use of the insulation medium in a converter building.

Considering flammability of the compounds, it is further preferred that the ratio of the number of fluorine atoms to the total number of fluorine and hydrogen atoms, here briefly called "F-rate", of the hydrofluoro monoether is at least 5:8. It has been found that compounds falling within this definition are generally non-flammable and thus result in an insulation medium complying with highest safety requirements.

According to a further preferred embodiment, the ratio of the number of fluorine atoms to the number of carbon atoms, here briefly called "F/C-ratio", ranges from 1.5:1 to 2:1. Such compounds generally have a GWP of less than 1'000 over 100 years, thus leading to a very environment-friendly insulation medium. It is particularly preferred that the hydrofluoro monoether has a GWP of less than 700 over 100 years.

Regarding the environmental aspect, it is further preferred that the hydrofluoro monoether also has an ODP of 0, as mentioned above.

The above mentioned desirable effects can in particular be achieved by a hydrofluoro monoether having the general structure (IV)

CₐH_{b}F_{c}-O-C_{d}HₑF_{f} (IV)

wherein a and d independently are an integer from 1 to 3 with a + d = 3 or 4, b and c independently are an integer from 0 to 7 with b + c = 2a + 1, and e and f independently are an integer from 0 to 7 with e + f = 2d + 1, with further at least one of b and e being 1 or greater and at least one of c and f being 1 or greater.

It is thereby a preferred embodiment that in the general structure or formula (IV) of the hydrofluoro monoether:
a is 1, b and c independently are an integer ranging from 0 to 3 with b + c = 3, d = 2, e and f independently are an integer ranging from 0 to 5 with b + c = 5, with further at least one of b and e being 1 or greater and at least one of c and f being 1 or greater.

According to a particularly preferred embodiment, exactly one of c and f in the general structure (IV) is 0. The corresponding grouping of fluorines on one side of the ether linkage, with the other side remaining unsubstituted, is called "segregation". Segregation has been found to reduce the boiling point compared to unsegregated compounds of the same chain length. This feature is thus of particular interest for the dielectric insulation medium, because compounds with longer chain lengths allowing for higher dielectric strength can be used without risk of liquefaction under operational conditions.

Most preferably, the hydrofluoro monoether is selected from the group consisting of pentafluoro-ethyl-methyl ether (CH₃-O-CF₂CF₃) and 2,2,2-trifluoroethyl-trifluoromethyl ether (CF₃-O-CH₂CF₃).

Pentafluoro-ethyl-methyl ether has a boiling point of +5.25°C and a GWP of 697 over 100 years, the F-rate being 0.625, while 2,2,2-trifluoroethyl-trifluoromethyl ether has a boiling point of +11°C and a GWP of 487 over 100 years, the F-rate being 0.75. They both have an ODP of 0 and are thus environmentally fully acceptable.

In addition, pentafluoro-ethyl-methyl ether has been found to be thermally stable at a temperature of 175°C for 30 days and therefore to be fully suitable for the operational conditions given in a converter building. Since thermal stability studies of hydrofluoro monoethers of higher molecular weight have shown that the stability of ethers containing fully hydrogenated methyl or ethyl groups have a lower thermal stability compared to those having partially hydrogenated groups, it can be assumed that the thermal stability of 2,2,2-trifluoroethyl-trifluoromethyl ether is even higher.

Hydrofluoro monoethers in general, and pentafluoro-ethyl-methyl ether as well as 2,2,2-trifluoroethyl-trifluoromethyl ether in particular, display a low risk for human toxicity. This can be concluded from the available results of mammalian HFC (hydrofluorocarbon) tests. Also, information available on commercial hydrofluoro monoethers give no evidence of carcinogenicity, mutagenicity, reproductive/developmental effect and other chronic effects of the compounds of the present application.

Based on the data available for commercial hydrofluoro ethers of higher molecular weight, it can be concluded that hydrofluoro monoethers in general, and in particular pentafluoro-ethyl-methyl ether as well as 2,2,2-trifluoroethyl-trifluoromethyl ether, have a lethal concentration LC 50 of higher than 10'000 ppm, rendering them suitable for use in a converter building also from a toxicological point of view.

The hydrofluoro monoether mentioned above have a higher dielectric strength than air. In particular, pentafluoro-ethyl-methyl ether has a dielectric strength about 2.4 times higher than air at 1 bar.

Given its boiling point, which is preferably below 30°C, the hydrofluoro monoether according to the present invention, particularly pentafluoro-ethyl-methyl ether and 2,2,2-trifluoroethyl-trifluoromethyl ether, respectively, is normally at least partially in the gaseous state at operational conditions of a convertor building.

As mentioned, the advantages achieved by the present invention are of particular relevance when the converter building is comprised in or is an HVDC station, an HVAC station or an HVAC/HVDC station. HVDC and HVAC stations as well as HVAC/HVDC station encompass both onshore and offshore stations. In particular, the present invention relates to an HVDC offshore station.

If in the insulation medium air and 1,1,1,2,4,4,5,5,5-nonafluoro-4-(trifluoromethyl)pentan-3-one as insulation component C1 is used, the fraction of the latter is at room temperature such that the dielectric performance of the insulation medium is comparable to that of SF₆. This allows a reduction of the insulation distances by a factor of up to about 3 to be achieved.

In a conventional Dolwin converter, the average air insulation distance is 2.5 m. By using an insulation medium comprising apart from air 1,1,1,2,4,4,5,5,5-nonafluoro-4-(trifluoromethyl)pentan-3-one a reduction down to about 0.8 m can thus be achieved.

According to a particularly preferred embodiment, the at least one room is selected from the group consisting of: a valve hall having valve hall walls, a valve hall opening and power semiconductor valves; a reactor hall having reactor hall walls, a reactor hall opening and a reactor; a DC hall having DC hall walls, a DC hall opening and DC electrical active parts, which may include power semiconductors; a GIS hall having GIS hall walls, a GIS hall opening and gas-insulated switchgears; a cable hall having cable hall walls, a cable hall opening and electrical cables; a transformer hall having transformer hall walls, a transformer hall opening and transformers; an arrestor hall having arrestor hall walls, an arrestor hall opening and arrestors.

According to a one embodiment, the valve hall is enclosed by the valve hall wall having the valve hall opening, said valve hall comprising at least a part of the power semiconductor valves, in particular IGBTs (insulated-gate bipolar transistors) and/or thyristors, as electrical active part, and the dielectric insulation medium comprising the dielectric insulation component C1. The valves may thereby be arranged in the form of valve stacks.

In a conventional Dolwin converter, the valve hall typically has a height of 9 m, a length of about 40 m and a depth of about 30 m, amounting to a total volume of 10'800 m³.

A reduction in height can be achieved by reducing the insulation distance between the top of the valve stacks and the ceiling as well as the insulation distance between the bottom of the valve stacks and the floor from 2.5 m to 0.8 m. Thus, an overall reduction of about 3.4 m down to about 5.6 m can be achieved.

In the valve hall, there are generally three groups of valve stacks, each belonging to a particular phase. In a conventional Dolwin converter, the distance between the outer valve stacks and the room wall is about 2.5 m, and the distance between the middle valve stack and the two outer valve stacks is in both cases about 6 m.

Using the exemplary insulation medium mentioned above comprising 1,1,1,2,4,4,5,5,5-nonafluoro-4-(trifluoromethyl)pentan-3-one and air, a reduction of the insulation distance between the middle valve stack and the two outer valve stacks down to about 2 m can be achieved.

For reasons of maintenance, also the distance between the outer valve stacks and the room wall is reduced down to about 2 m, and in principle a further reduction of the insulation distance down to about 0.8 m could be achieved.

Thus, an overall reduction of the depth of the valve hall from about 30 m to about 21 m can be achieved.

Also, the length of the valve hall can be reduced from about 40 m to about 39 m.

Combining the above reduction in height, depth and length, a valve hall can be achieved having a total volume of only about 4'686 m³. The total reduction per valve hall thus amounts to 6'214 m³. Considering that there are two valve halls in the station, the total volume reduction amounts to 12'428 m³. Also when the respective semiconductor values might be different from the ones mentioned, a considerable reduction of the valve hall volume is achieved in any case by using the insulation medium of the present invention.

It is understood that the valve hall itself can be subdivided into separate smaller compartments of which at least one or preferably all compartments comprise the dielectric insulation medium according to the present invention. Due to the compartments being smaller, the gas handling, the monitoring and the evacuation can be simplified, as also discussed below.

According to a further embodiment, the DC hall is enclosed by the DC hall wall, said DC hall comprising DC electrical active parts and the dielectric insulation medium comprising dielectric insulation component C1. In the context of the present invention, the term "converter building" is to be interpreted broadly such that it also encompasses the DC hall *per se.*

The DC electrical active parts contained in the DC hall contain preferably at least one electrically active part selected from the group consisting of: disconnectors, circuit breakers, switches and DC filters.

These are typically connected to the valve stacks via bushings through the room walls between the DC hall and the valve halls. Using the dielectric insulation medium according to the present invention, a substantial reduction of the insulation distances can also be achieved in the DC hall.

In a conventional Dolwin converter, the DC hall typically has a height of 9 m, a length of about 23 m and a depth of about 30 m, amounting to a total volume of 6'210 m³. Reduction of the insulation distance from 2.5 m to about 0.8 m in the vertical direction and from 2.5 to about 2 m in the horizontal directions results in a total DC hall volume of 3'573 m³, the total volume reduction being 2'637 m³.

Alternatively, a reduction in the volume of the DC hall can be achieved by enclosing all electrical active parts in the DC hall inside two gas-insulated encapsulations (GIS), connected directly to the bushings from the two valve halls, respectively. Such gas-insulated substation may also contain the dielectric insulation medium of the present invention, in particular under pressure of more than 1 bar, and further in particular containing the dielectric insulation component C1 other than air in higher concentrations than as used in the above-mentioned sealable and preferably accessible rooms of the converter station.

As mentioned, the total volume of the converter building is in the order of several thousands of cubic meters, which illustrates that its size and hence the required insulation gas volume are by magnitudes higher than in a GIS encapsulation. Alike, the volume of at least some of the rooms is in the order of hundreds if not thousands of cubic meters.

Given the large size of the converter building, it is generally required for safety reasons that the internal pressure of each room does not or not significantly exceed atmospheric pressure, i.e. is at least approximately 1 bar. According to a preferred embodiment, the pressure of the insulation medium is at least approximately 1 bar at most, thus taking account of the respective safety requirements. Preferably, the pressure is such that it includes a slight overpressure, i.e. is slightly higher than 1 bar, in order to prevent humid air from entering the interior space, which could be the case, if the room walls had a leak.

According to a further embodiment of the present invention, the at least one opening gives access to an encapsulated electrically active part, in particular an encapsulated switchgear, and the dielectric insulation component C1 is other than sulphur hexafluoride SF₆, and in particular that the dielectric insulation medium comprises air or an air component.

As mentioned, the insulation medium comprising the insulation component C1 is non-toxic and may be present in concentrations such that maintenance personnel may enter the room. In particular, the concentrations may be chosen such that breathing without health risk is possible, e.g. by one of the steps selected from the group consisting of: evacuating the room before entering, flooding the room with air, compressed air, or the like before entering the room, ventilating the room to homogenize the concentration present in the room, choosing sufficiently low, in particular health-safe, concentrations under operating conditions, using a gas mask, and/or combinations thereof.

If concerns regarding the toxicity of the insulation medium exist, it is preferably removed from the interior space before the space is accessed. To this end, cooling means are preferably attributed to the at least one room for cooling its walls or interior space. In particular, these cooling means serve for enforced condensation of at least one dielectric compound C1 ... Cn. Thus, the cooling means allow at least one insulation component C1 ... Cn to be condensed, collected and removed from the interior space by a drainage system. Besides that, the cooling means may also allow to lower the operating temperature of the room without aiming at condensing the dielectric insulation component.

In summary, the cooling means can serve for different purposes, such as:
a) evacuating the interior space; and/or
b) recovering at least one dielectric insulation component C1 ... Cn; and/or
c) setting a lower operating temperature of the room.

In particular when using a fluoroketone as insulation component C1, contact with water might lead to the formation of toxic and corrosive by-products, such as perfluoropropionic acid. In order to reduce the probability of water entering the interior space due to e.g. unintentional leakage, a non-aqueous cooling medium is preferably used in the cooling means.

In particular, the dielectric insulation component C1 itself is used as a cooling medium. In this regard, it is to be noted that the fluoroketones mentioned have apart from their dielectric insulation capabilities also excellent cooling capabilities. The cooling medium can thereby be a cooling liquid or a working medium in a heat pipe system. Such heat pipe system may be applied for cooling at least one of the rooms or at least one of the electrically active parts present in the rooms.

In an embodiment, the dielectric insulation medium is introduced into the interior space via injection means, such as nozzles.

In order to homogenously distribute the dielectric insulation medium, and in particular the at least one insulation component C1, C2, ... Cn in the interior space of the room, the room preferably comprises a fan.

When a fluoroketone or a hydrofluoro monoether is used as insulation component C1, the presence of water in the interior space can lead to the formation of toxic and corrosive by products, as mentioned above. According to a preferred embodiment of the present invention, circulating means are thus attributed to the room for circulating the dielectric insulation medium. Said circulating means may comprise means for purifying the insulation medium from impurities, in particular from water and/or products formed by the reaction of the insulation medium with water. These purification means can comprise or consist of a filter or a solid absorber for the respective substance. Although the formation of hydrofluoric acid (HF) is unlikely under normal operating conditions, it is also preferred that the purification means comprise an HF absorber.

For at least one insulation component C1, C2 ... Cn of the insulation medium, the converter building generally further comprises a filling reservoir for storing said dielectric insulation component. Preferably, the reservoir is connected to injection means for injecting the dielectric insulation component into the interior space of the room.

According to a particularly preferred embodiment, the converter building does not only comprise a reservoir for insulation component C1, but also a reservoir for the actual insulation medium, in particular insulation component C1 in mixture with air.

It is further preferred that the room comprises a drainage system for collecting and removing liquid substance contained in the interior space of the room. This is of particular relevance when insulation component C1 is to be removed, as may be the case for maintenance works. Preferably, the drain system comprises means for directing the liquid substance or a fraction thereof to a recollecting reservoir. Thus, regaining of at least a part of the insulation component can be achieved, which is advantageous from both an economic and ecological perspective.

It is further preferred that the converter building further comprises means for decomposing the insulation medium to an environmentally friendly substance. This is despite of the fact that the fluoroketones and hydrofluoro monoethers, that are preferably used, have no impact on the atmosphere, but takes into account that regeneration of the component from fluorinated waste (generated by the decomposition of the component due to e.g. arcing or exposure to sunlight) is relatively tedious to perform.

Preferably, the means for decomposing the insulation medium comprises a plasma waste treatment apparatus, as their installation requires only a relatively small space. Plasma waste treatment apparatuses are thus particularly suitable for use in offshore stations.

Since the dielectric strength of the insulation medium is strongly dependent on the fraction of insulation component C1 in the insulation medium, specifically on the ratio of e.g. the fluoroketone to air, the room preferably comprises monitoring means for monitoring a composition, a concentration, a humidity, a pressure, a density and/or a temperature of the insulation medium. By continuously tracking e.g. the partial pressure of the insulation component C1, possible leakage condensation, reaction or decomposition can be detected *in situ.* It is further preferred that the converter building also comprises controlling means for controlling a composition, a concentration, a humidity, a pressure, a density and/or a temperature of the insulation medium.

According to a further preferred embodiment, the converter building comprises an intermediate gas storage room for temporarily storing the dielectric insulation medium. If a given room is to be evacuated temporarily, the dielectric insulation medium can be directed into the intermediate storage room, e.g. by a fast evacuation or removal pump, and may simply be redirected to the room for refilling, thus allowing a very simple and fast evacuation and refilling procedure.

According to a further aspect, the present invention further relates to a method for providing a converter building according to any of the preceding claims, comprising the consecutive steps of:
evacuating an interior space of at least one room of the converter building,
drying the interior space, until a humidity below a predetermined humidity value is obtained, and
introducing dry air and the dielectric insulation component C1 into the interior space of the room such that an insulation medium having a predetermined pressure is obtained.

To this end, the converter building comprises an evacuation and refill system which comprises a filling reservoir, e.g. for each of the insulation medium and the pure insulation component C1, as well as at least one compressor and vacuum pump system and a filter. After evacuation, the required amount of insulation component C1 is injected or sprayed from the filling reservoir into the interior space via e.g. a nozzle system installed e.g. on the ceiling of the respective room so that the required partial pressure of C1 is reached. Finally, the remainder of the insulation medium, generally dry air, is introduced up to the predetermined pressure, generally 1 bar.

The method of the present invention encompasses both an embodiment, in which the steps are taken using separate means for each room, or an embodiment using the same means for at least a portion of the rooms, in particular all rooms. The first mentioned embodiment is particularly preferred, if the volume of each of the respective rooms is relatively large.

The invention is further illustrated by way of examples given in the attached Figures of which:
- Fig. 1: shows an HVDC offshore station according to the present invention in cross-sectional view;
- Fig. 2: is a graphical representation of the calculated electrical breakdown field as a function of the operating temperature for an insulation medium according to the present invention in comparison with air and SF₆; and
- Fig. 3: shows a schematic representation of a room of a converter building according to the present invention.

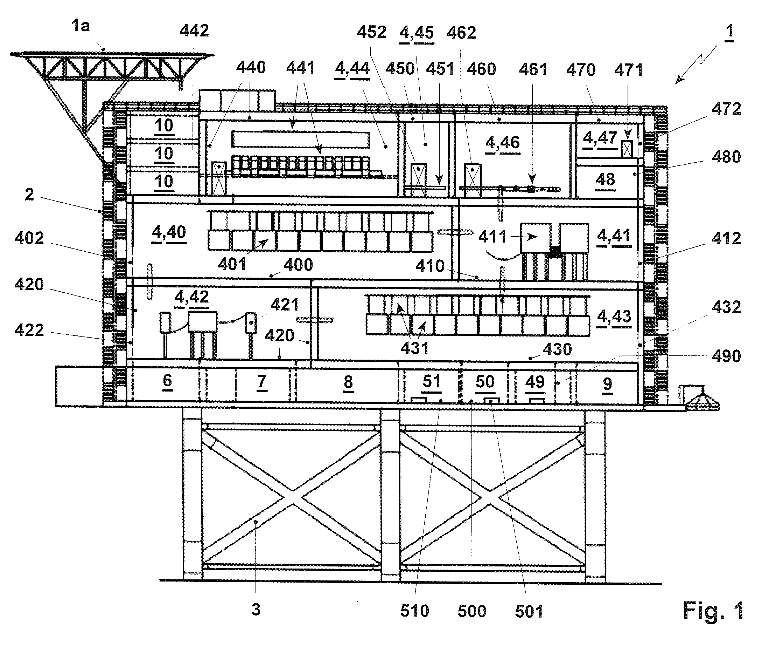

The HVDC offshore converter station shown in Fig. 1 corresponds to a conventional Dolwin converter station. It comprises a converter building 1 and a basement construction 3 on which the converter building 1 is arranged. The converter building 1 is spatially defined by a building wall 2 (e.g. with a staircase) which encloses a plurality of different rooms 4; 40-47, and may comprise further chambers or compartments 48-51.

Each of the rooms 4; 40-47 comprises a room wall 400, 410, 420, ... 470 enclosing an interior space and may also be designated as a "hall", which contain an electrical active part (401, 411, 421, ..., 471), as discussed below. The room walls 400, 410, 420, ... 470 are solid and have at least one opening, in particular door 402, 412, 422, 432; 442, 452, 462, 472, which is designed such that it allows a human to enter the interior space. The opening or openings or door or doors 402, 412, ..., 472 is or are sealable such that the room walls 400, 410, ..., 470 enclose their respective interior space in a gas-tight manner when its respective opening or openings 402, 412, ..., 472 is or are sealed, and the interior space contains a dielectric insulation medium comprising a dielectric insulation component C1 other than air, as disclosed herein. The means for sealing can for example be a door sealing 403, 413, 423, 433, 443, 453, 463, 473, as shown in Fig. 3.

The rooms 4; 40-47 and further chambers or compartments 48-51 are arranged e.g. on four different floors. On the first or bottom floor, an electrical supply hall 51 containing electrical supplies and a low voltage switchgear hall 50 containing a low-voltage switchgear 501 are housed apart from a mechanical workshop 6, a sewage/sludge tank 7, fresh water pumps 8, a heating/ventilation/air-conditioning system 49 and a Diesel generator 9.

On the second floor and third floor, two valve halls 4, 40, 43, a DC hall 4, 42 and a reactor hall 4, 41 are housed. The DC hall 42 contains e.g. disconnectors and circuit breakers as DC electrical active parts 421, which are connected to the stacks of power semiconductor valves 401, 431 contained in the valve halls 40, 43, respectively, via bushings through the room walls 400, 420; 420, 430, respectively between the DC hall 42 and the valve halls 40, 43, respectively.

The valves 401 in the valve hall 40 on the third floor are further connected to the reactors 411 (i.e. coils forming large inductances) in the reactor hall 41 via bushings. Usually, the reactors 411 are coils without an iron core.

On the fourth or top floor, three living quarters 10 are arranged on top of each other, as well as a GIS hall 44 containing GIS switchgear 441, a cable hall 45 containing cables 451, a transformer hall 46 containing transformers 461, the latter also being connected to the reactor hall 41 via bushings. The fourth floor further houses an arrestor hall 47 containing arrestors 471. According to an embodiment of the invention, an intermediate gas storage room 48 for temporarily storing the dielectric insulation medium contained in another room can be present, as well.

By means of the valves or valve stacks 401, 431, AC is converted to DC. Correspondingly, the insulation distances between the stacks of valves 401, 431 and the valve hall walls 400, 430 are relatively big in order to allow safe operation. The valve hall of a conventional Dolwin converter thus has a valve hall of about 10'800 m³.

According to the present invention, at least one room 4; 40-47 containing in its interior space an electrical active part 401, 411, ..., 471 contains a dielectric insulation medium comprising a dielectric insulation component C1 other than air.

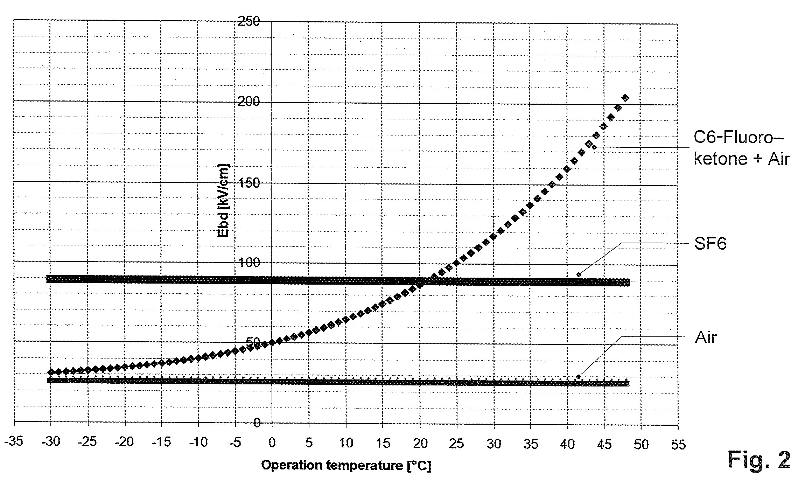

For an insulation medium comprising apart from air 1,1,1,2,4,4,5,5,5-nonafluoro-4-(trifluoromethyl)pentan-3-one ("C6-ketone") which is preferably used as insulation component C1, the calculated electrical breakdown field (Ebd) as a function of the operating temperature is shown in Fig. 2.

As can be seen from Fig. 2, the Ebd calculated for the insulation medium can be increased with increasing temperature due to the increasing partial pressure of insulation component C1 that may be present in the gaseous phase. At 0°C, the Ebd is about 2 to 2.5 times higher than that of pure synthetic air. Assuming a homogenous or nearly homogenous field distribution, this means that for a minimum operating temperature of 0°C, a reduction of the insulation distances by a factor of about 2.5 can be achieved by replacing synthetic air with the insulation medium according to the present invention.

At 20°C, the Ebd corresponds approximately to the one achieved with SF₆, which is about 3 times higher than that of pure synthetic air. For a minimum operating temperature of 20°C, a reduction of the insulation distances by a factor of about 3 can be achieved by replacing synthetic air with the insulation medium according to the present invention. Again, this applies for homogenous or nearly homogenous field distribution.

The method of the present invention can be illustrated by the exemplary embodiment shown in Fig. 3.

Prior to filling, the interior space of the room 4; 40-47 containing an electrical active part 401, 411, ..., 471 and having walls 400, 410, ..., 470 and a sealable opening - or door 402, 412, ..., 472, in particular a door 402, 412, ..., 472 with sealing means 403, 413, 423, 433, 443, 453, 463, 473 - for a person to enter and/or leave the room is evacuated by using an evacuation system 12 comprising an evacuating pump 120, an evacuating filter system 121 and an evacuating mechanical valve 122, which are connected to an evacuating orifice 13 in the room wall 400 via the ducts of an evacuating pipe system 123. Optionally, the interior space can be dried and cleaned by filling with an inert gas, e.g. N₂, from a pressurized purging reservoir 11 via mechanical valve 122 using a filter system 121' located upstream of the valve 122 for removing residual water and other impurities from the inert gas.

The inert gas (or purge gas) filled interior space may then be evacuated again to the atmosphere by using evacuation system 12. The steps of filling with an inert gas and removing the inert gas can be repeated several times. During these steps, the humidity and the pressure in the interior space are measured and controlled using a multi-sensor system comprising monitoring means 16, which may include sensors e.g. for the concentration, the pressure, the temperature, the density and the humidity of the insulation medium, as well as communication lines 160 for transmitting the signals of the sensors, e.g. to a central station (not shown).

Once the desired humidity or dryness is achieved, dry and filtered synthetic air is introduced into the interior space, whereby the filter system 121' provides the required purity and humidity of the air.

If according to the multi-sensor system 16 there is still moisture in the interior space, the air can be circulated using circulation means 14 comprising a fan 140 and a mechanical valve 142 through which the air is directed to a filter 141 for purifying the air from residual water until the desired humidity is reached, and then reintroducing the filtered and dried air into the interior space. The filter 141 can be or can include a moisture filter and/or an HF filter.

Once the interior space of the room 4; 40-47 is at the desired humidity and pressure level, the insulation component C1 is injected by means of a filling system 15. Said filling system 15 comprises a filling reservoir 155 from which the insulation component C1 is pumped using a filling pump 154 through a filling pipe system 153 and via a filling mechanical valve 152 to the injection system 157, e.g. in the form of nozzles. The filling system 15 may further comprise a filling pump 150, filling filter system 151, filling mechanical valve 152 connected via a or the filling pipe system 153 to the filling orifice 156. These further elements 150-153 may allow to fill in air or general another dielectric insulation component C2, ..., Cn other than the dielectric insulation component C1. Please note that these further elements may or may not be linked to the filling system providing the dielectric insulation component C1 from filling reservoir 155 such that the component C1 and other components C2, ..., Cn are mixed together after being filled in and thus inside the room 4; 40-47, and/or may be mixed together before being filled in and thus outside the room 4; 40-47, e.g. in a mixture tank (not shown).

For homogenously distributing the insulation component C1 in the interior space, the room 4; 40-47 can comprises a fan system 14 that may comprise a fan 140, a circulation filter 141, e.g. moisture filter 141 and/or HF filter 141, and a mechanical valve 142.

During operation, the composition of the insulation medium as well as the pressure and the temperature in the interior space is monitored with the monitoring means 16 and, if needed, additional air or insulation components is injected into the interior space of the room 4; 40-47.

The temperature inside the interior space can be regulated by using a heating and cooling system 171.

If the interior space of the room 4; 40-47 needs to be accessed, e.g. for maintenance or in case of emergency, it may be that the insulation medium has to be removed. To this end, the temperature is decreased by using the cooling system 171.

If the temperature falls below a predetermined value, the insulation component C1 starts to liquefy, whereupon the condensate can be collected on the recollecting floor 170 and can be removed from the interior space. Alternatively, the gas can be flown through a condensation tank (not shown) which is located outside the room 4; 40-47 and can therein be liquefied and separated from the air. For the case that the insulation medium consists of air and a single insulation component C1, the condensate is separated from the room 4; 40-47 by a recollecting valve 172 and pumped via a recollecting duct 173 by means of a recollecting pump 175 to either a recollecting reservoir 174 or a disposal tank. It is thereby preferably filtered to remove dust particles from the insulation component C1.

For the case that the insulation medium comprises more than one insulation component C1, C2, ... Cn, the condensate is separated into its respective components by e.g. phase separation or distillation, and the separated components are then pumped into the respective reservoir or disposal tank, respectively.

After separation of the insulation components from the air, the air is pumped through a filter and released into the atmosphere, preferably via evacuation system 12, in particular via orifice 13, duct 123, valve 122, filter 121 and pump 120. The interior space can later be filled again as described above.

As discussed above, the concept of the present invention is most preferably used for the valve hall 4; 40, 43 and/or the DC hall 4; 42. In order to simplify gas handling, monitoring, evacuation and maintenance of the room 4; 40-47, in particular the valve hall 40, 43 and/or DC hall 42, the room 4; 40-47 can be subdivided into separate smaller compartments (not shown) which may be housing the electrically active parts 401-471. Thus, less efficient means for homogenously distributing the dielectric insulation medium of the present invention in the room 4; 40-47, in particular in the valve hall 40, 43 and/or DC hall 42, for monitoring, and, in view of accessing the room 4; 40-47 e.g. for maintenance, for condensing the insulation gas component C1 and for evacuating the room 4; 40-47 can be chosen than if it would be the case for such means that are required for one large room 4; 40-47 without separate smaller compartments.

In yet other words, the object of the invention is solved by a building 1, in particular a converter building 1 as disclosed above or according to any of the claims 1-27, the building 1 comprising at least one room 4; 40-47 having a solid room wall 400, 410, 420, ..., 470 enclosing an interior space and at least one electrical active part 401, 411, 421, ..., 471 contained in said interior space, the room wall 400, 410, ..., 470 having at least one opening 402, 412 ..., 472, which is designed such that it allows a human to enter the interior space, wherein the opening 402, 412, ..., 472 is sealable, the room wall 400, 410, ..., 470 encloses the interior space in a gas-tight manner when the opening 402, 412, ..., 472 is sealed, and the interior space contains a dielectric insulation medium comprising a dielectric insulation component C1 other than air, wherein further the electrical active part comprises at least one non-encapsulated electrical active part that is operated under medium voltage and/or high voltage, and/or under heavy current. Such operation under medium voltage and/or high voltage, and/or under heavy current serves for electric power handling, in particular for electric power generation, transforming, transmission, distribution, and further in particular for electric power usage at medium and/or high voltage.

In embodiments, the electrical active part is selected from the group consisting of: a generator, a transformer, a circuit breaker, a dead tank breaker with bushings, a module or "PASS" module comprising electrical components housed in a dead tank and equipped with bushings, an instrument transformer, a disconnector, an earthing switch, a combined disconnector and earthing switch, a busbar, a surge arrester, a cable, a part of a substation, a substation, a part of an electrical distribution or transmission line; and wherein the electrical active part comprises at least one non-encapsulated electrical active part or component, in particular a bushing or conductor or bare cable or bare part, which non-encapsulated electrical active part or component requires during operation insulation by the dielectric insulation medium comprising or being a gas and having a dielectric insulation capability higher than the dielectric insulation capability of air, in particular of dry air. Herein, bare part can encompass a partially bare part, for example a part having at least one location that is without solid insulation or has a naked conductor. Bare part can also encompass an incompletely bare part, for example a part having at least one location that has a reduced solid insulation that requires in its environment a gas insulation with higher dielectric strength than that of air, in particular of ambient air or of dry air.

In particularly preferred embodiments, the room 4; 40-47 is filled with the dielectric insulation medium comprising or being a mixture of air with gaseous fluoroketone having exactly 6 carbon atoms, and the electrical active part 401, 411, 421, ..., 471 comprises a non-encapsulated electrical active part or electrical component insulated by the dielectric insulation inside the room 4; 40-47 and further comprises an encapsulated component, which is not exposed to the dielectric insulation medium and has in its encapsulation a gaseous insulation comprising or being a mixture of at least one of air, carbon dioxide and oxygen, in particular carbon dioxide and oxygen, with a gaseous fluoroketone having exactly 5 carbon atoms.

In another aspect, the invention resides in a method for operating a building 1 as disclosed above or according to any of the claims 28-30, in particular for operating a converter building 1 as disclosed above or according to any of the claims 1-27, wherein the non-encapsulated electrical active part 401, 411, 421, ..., 471 is maintained in operation, in particular is operated under medium voltage and/or high voltage and/or under heavy current, also during time intervals when the door 402, 412, 422, 432, 442, 452, 462, 472 is opened.

In embodiments, refilling means, in particular the injection means 157, attributed to the room 4; 40-47 are activated for refilling the room 4; 40-47 in regular time intervals, and/or by opening and/or closing the door, and/or in a controlled manner using monitoring means attributed to the room 4; 40-47, for example monitoring means 16, 160 for monitoring a composition, a concentration, a humidity, a pressure, a density and/or a temperature of the insulation medium inside the room 4; 40-47, and using controlling means attributed to the room 4; 40-47, in particular controlling means 12, 15 for controlling a composition, a concentration, a humidity, a pressure, a density and/or a temperature of the insulation medium inside the room 4; 40-47.

In embodiments, the refilling means are activated manually, in particular during every instance when the door has been opened, or semi-manually, wherein opening and/or closing the door activates the refilling means, in particular wherein the refilling means are arranged close to the at least one non-encapsulated electrical active part 401, 411, 421, ..., 471.

The present invention has general advantages such as: electrical active parts suitable for handling electric power at medium and/or high voltage can be gas-insulated without being encapsulated in a metallic enclosure, such as typical GIS enclosures that are tight against substantial over-pressures (e.g. 1.2 bar or higher), can be designed and arranged with reduced dimensions compared to a pure air-insulation, and can be accessed by personell without removal of the dielectric insulation medium or even during active electrical operation. This allows space savings, reduced building or room dimensions for housing the electrical active parts, or even new concepts of electric facilites or stations or substations with buildings or rooms that house electrical active parts with gas-insulation better, i.e. dielectrically stronger, than air-insulation, but without over-pressure or with only slight or insignificant over-pressure (e.g. less than 1.1 bar). Thus, previously air-insulated electric active parts can be reduced in size and mutual distances and/or previously GIS-insulated electrical active parts may be replaced.

While there are shown and described presently preferred embodiments of the invention, it is to be distinctly understood that the invention is not limited thereto but may otherwise variously be embodied and practised within the scope of the following claims. Therefore, terms like "preferred", "preferably", "in particular", "advantageously", etc. signify optional and exemplary embodiments only.

### List of reference numerals

1 converter station, converter building
1a helicopter platform
2 building wall (e.g. with staircase)
3 basement construction
4; 40-7 room
40 valve hall
41 reactor hall
42 DC hall
43 valve hall
44 GIS hall
45 cable hall
46 transformer hall
47 arrestor hall
48 intermediate gas storage compartment
49 heating/ventilation/air-conditioning chamber
50 low-voltage switchgear chamber
51 electrical supply chamber
400, 410, 420, 430; 440, 450, 460, 470 wall of halls, room wall
480, 490, 500, 510 chamber wall, compartment wall
401, 411, 421, 431; 441, 451, 461, 471, electrically active part
401 power semiconductor valve(s)
411 reactor
421 DC electrical active part
431 power semiconductor valve(s)
441 GIS switchgear
451 cables
461 transformers
471 arrestors
501 low-voltage switchgear
402, 412, 422, 432; 442, 452, 462, 472 opening; opening for human being, door
403, 413, 423, 433; 443, 453, 463, 473 sealing means, door sealing
6 mechanical workshop
7 sewage room, sludge tank
8 fresh water pumps
9 Diesel generator chamber
10 living quarter
11 purging reservoir, pressurized reservoir
12 evacuation system, evacuating compressor and pump system
120 evacuating pump
121, 121' evacuating filter system
122 evacuating mechanical valve
123 evacuating pipe system
124 purging reservoir valve
125 purging reservoir pump
13 evacuating orifice
14 circulating means
140 fan
141 filter, circulation filter; moisture filter, HF filter
142 mechanical valve
15 filling system
150 filling pump (for air)
151 filling filter system
152 filling mechanical valve
153 filling pipe system
154 filling pump (for dielectric insulation component C1)
155 filling reservoir, reservoir for dielectric insulation medium, or reservoir for dielectric insulation component C1
156 filling orifice (for air)
157 injection system, spraying system, nozzles (for dielectric insulation component C1)
16 monitoring means; sensor, moisture detector; multi-sensor system; sensor for concentration, pressure, temperature, density, and/or humidity of gas mixture or gas components
160 communication lines, sensor and signal lines
17 recollecting means, recollecting system; drainage system
170 recollecting floor
171 cooling means; heating and cooling system
172 recollecting valve
173 recollecting duct
174 recollecting reservoir, recovery vessel
175 recollecting pump, fast removal pump

## Claims

1. Converter building (1) comprising at least one room (4; 40, 41, 42, 43, 44, 45, 46, 47) having a solid room wall (400, 410, 420, 430, 440, 450, 460, 470) enclosing an interior space and an electrical active part (401, 411, 421, 431, 441, 451, 461, 471) contained in said interior space, the room wall (400, 410, ..., 470) having at least one opening (402, 412, 422, 432, 442, 452, 462, 472), which is designed such that it allows a human to enter the interior space, **characterized in that** the opening (402, 412, ..., 472) is sealable, the room wall (400, 410, ..., 470) encloses the interior space in a gas-tight manner when the opening (402, 412, ..., 472) is sealed, and the interior space contains a dielectric insulation medium comprising a dielectric insulation component C1 other than air.

2. Converter building (1) according to claim 1, wherein the converter building (1) is comprised in or is an HVDC station, an HVAC station or an HVAC/HVDC station (1), in particular an HVDC onshore or offshore station (1).

3. Converter building (1) according to any of the preceding claims, wherein the insulation component C1 is non-toxic and is present in concentrations such that maintenance personnel can enter the room (4; 40-47), in particular by performing one of the steps selected from the group consisting of: evacuating the room (4; 40-47) before entering, flooding the room (4; 40-47) with air or compressed air or the like before entering the room (4; 40-47), ventilating the room (4; 40-47) to homogenize the concentration present in the room (4; 40-47), choosing sufficiently low concentrations under operating conditions, using a gas mask, and/or combinations thereof.

4. Converter building (1) according to any of the preceding claims, wherein a door (402, 412, 422, 432, 442, 452, 462, 472) is arranged at the at least one opening, the door (402, 412, ..., 472) being moveable, in particular pivotable or slidable, with respect to the opening from a first state, in which the opening is open, to a second state, in which the opening is closed, and vice versa, and in particular wherein the door (402, 412, ..., 472) is an air lock door or revolving door for reducing outflow of the dielectric insulation medium.

5. Converter building (1) according to claim 4, wherein sealing means (403, 413, ..., 473) are attributed to the at least one opening (402, 412, ..., 472) for providing a gas-tight closure [original claim 5] and the sealing means (403, 413, ..., 473) are arranged between a surface of the room wall (400, 410, 420, ..., 470) in a region surrounding the at least one opening and a surface of the door (402, 412, ..., 472).

6. Converter building (1) according to any of the preceding claims, wherein the dielectric insulation component C1 is at least partially in gaseous phase at operational conditions, in particular wherein the dielectric insulation medium is gaseous at operational conditions.

7. Converter building (1) according to any of the preceding claims, wherein the dielectric insulation component C1 has a higher breakdown field strength than air.

8. Converter building (1) according to any of the preceding claims, wherein the dielectric insulation component C1 is an organofluorine compound.

9. Converter building (1) according to any of the preceding claims, wherein the dielectric insulation component C1 is selected from the group consisting of: a fluoroketone, a hydrofluoro monoether, a perfluoroether, and mixtures thereof;
in particular wherein the fluoroketone contains from 4 to 12 carbon atoms, preferably from 5 to 7 carbon atoms, most preferably exactly 5 or exactly 6 carbon atoms; and/or in particular wherein the hydrofluoro monoether contains at least 3 carbon atoms, in particular exactly 3 or exactly 4 carbon atoms.

10. Converter building (1) according to any of the preceding claims, wherein the insulation medium comprises in addition to the dielectric insulation component C1 at least one further insulation component C2, ..., Cn, said further insulation component C2, ..., Cn being air or an air component, in particular being selected from the group consisting of: nitrogen, oxygen, carbon dioxide, noble gases, and mixtures thereof.

11. Converter building (1) according to any of the preceding claims, wherein the insulation medium is devoid of sulphur hexafluoride SF₆, and in particular wherein the interior space of the room (4; 40-47) or of each room (4; 40-47) is devoid of SF₆.

12. Converter building (1) according to any of the preceding claims, wherein the electrical active part (401, 411, 421, ..., 471) is a medium voltage and/or high voltage and/or heavy current electrical active part, in particular is a high voltage electrical part above 72 kV.

13. Converter building (1) according to any of the preceding claims, wherein at least one of the at least one electrical active part (401, 411, 421, ..., 471) is non-encapsulated, in particular wherein the non-encapsulated electrical active part is in operation and requires during operation a dielectric gas insulation with a dielectric insulation capability higher than the dielectric insulation capability of air, in particular of dry air.

14. Converter building (1) according to any of the preceding claims, wherein the at least one room (4; 40-47) is selected from the group consisting of: valve hall (40, 43) having valve hall walls (400, 430), a valve hall opening (402, 432) and power semiconductor valves (401, 431); reactor hall (41) having reactor hall walls (410), a reactor hall opening (412) and a reactor (411); DC hall (42) having DC hall walls (420), a DC hall opening (422) and DC electrical active parts (421); GIS hall (44) having GIS hall walls (440), a GIS hall opening (442) and gas-insulated switchgears (441); cable hall (45) having cable hall walls (450), a cable hall opening (452) and electrical cables (451); transformer hall (46) having transformer hall walls (460), a transformer hall opening (462) and transformers (461); arrestor hall (47) having arrestor hall walls (470), an arrestor hall opening (472) and arrestors (471).

15. Converter building (1) according to claim 14, wherein the valve hall (40, 43) is enclosed by the valve hall wall (400, 430) having the valve hall opening (402, 432), said valve hall (40, 43) comprising at least a part of the power semiconductor valves (401, 431), in particular IGBTs and/or thyristors, of the converter building (1) as electrical active part (401, 411, 421, ..., 471), and the dielectric insulation medium being present in at least a part of the valve hall (40, 43) and comprising the dielectric insulation component C1; in particular wherein the valve hall (40, 43) is subdivided into separate compartments, at least one of the compartments being gas-tight and its interior space containing the dielectric insulation medium comprising the dielectric insulation component C1.

16. Converter building (1) according to any of the claims 14-15, wherein the converter building (1) is or contains a DC hall (42) which is enclosed by a DC hall wall (420) having the DC hall opening (422) and containing at least one DC electrical active part (421) selected from the group consisting of: disconnectors, circuit breakers, switches, DC filters, and the dielectric insulation medium being present in at least a part of the DC hall (42) and comprising the dielectric insulation component C1.

17. Converter building (1) according to any of the preceding claims, wherein the pressure of the insulation medium is at least approximately 1 bar and preferably includes a slight overpressure over 1 bar.

18. Converter building (1) according to any of the preceding claims, wherein the at least one opening (402, 412, 422, ..., 512) gives access to an encapsulated electrically active part (441, 501), in particular an encapsulated switchgear (441, 501), and the dielectric insulation component C1 is other than sulphur hexafluoride SF₆, and in particular that the dielectric insulation medium comprises air or an air component.

19. Converter building (1) according to any of the preceding claims, wherein cooling means (171), in particular for enforced condensation of at least one of the dielectric components C1 ... Cn, are attributed to the at least one room (4; 40-47) for cooling its walls (40; 400-470) and/or interior space.

20. Converter building (1) according to claim 20, wherein a non-aqueous cooling medium is used in the cooling means (171); in particular wherein the dielectric insulation component C1 is used as the cooling medium, in particular cooling liquid or working medium in a heat pipe system.

21. Converter building (1) according to any of the preceding claims, wherein the at least one room (4; 40-47) comprises a fan (140) for homogenously distributing the dielectric insulation medium, in particular the at least one insulation component C1, C2, ... Cn, in the interior space of the room (4; 40-47); and/or
wherein circulating means (14) are attributed to the room (4; 40-47) for circulating the dielectric insulation medium, said circulating means (14) comprising means (141) for purifying the insulation medium from impurities, in particular from water and/or products formed by the reaction of the insulation medium with water.

22. Converter building (1) according to any of the preceding claims, wherein for at least one insulation component C1, C2, ... Cn of the insulation medium the converter building (1) further comprises a filling reservoir (155) for storing said dielectric insulation component, in particular wherein the filling reservoir (155) is connected to injection means (157) for injecting the dielectric insulation component into the interior space of the room (4; 40-47).

23. Converter building (1) according to any of the preceding claims, wherein the room (4; 40-47) comprises a drainage system (17) for collecting and removing liquid substance contained in the interior space of the room (4; 40-47), said drainage system (17) optionally comprising means (170, 171, 172, 173) for directing the liquid substance or a fraction thereof to a recollecting reservoir (174).

24. Converter building (1) according to any of the preceding claims, wherein the converter building (1) further comprises means for decomposing the insulation medium to an environment-friendly substance.

25. Converter building (1) according to any of the preceding claims, wherein the room (4; 40-47) comprises monitoring means (16, 160) for monitoring a composition, a concentration, a humidity, a pressure, a density and/or a temperature of the insulation medium and controlling means (12, 15) for controlling a composition, a concentration, a humidity, a pressure, a density and/or a temperature of the insulation medium.

26. Converter building (1) according to any of the preceding claims, wherein it further comprises an intermediate gas storage room (48) for temporarily storing the dielectric insulation medium.

27. Converter building (1) according to any of the preceding claims, wherein the converter building (1) comprises or is or is comprised in a medium and/or high voltage substation comprising non-encapsulated gas-insulated electrical active parts (401, 411, 421, ..., 471).

28. Building (1), in particular converter building (1), the building (1) comprising at least one room (4; 40-47) having a solid room wall (400, 410, 420, ..., 470) enclosing an interior space and at least one electrical active part (401, 411, 421, ..., 471) contained in said interior space, the room wall (400, 410, ..., 470) having at least one opening (402, 412 ..., 472), which is designed such that it allows a human to enter the interior space, wherein further the electrical active part comprises at least one non-encapsulated electrical active part that is operated under medium voltage and/or high voltage, **characterized in that** the opening (402, 412, ..., 472) is sealable, the room wall (400, 410, ..., 470) encloses the interior space in a gas-tight manner when the opening (402, 412, ..., 472) is sealed, and the interior space contains a dielectric insulation medium comprising a dielectric insulation component C1 other than air.

29. Building (1) according to any of the claims 27-28, wherein the electrical active part is selected from the group consisting of: a generator, a transformer, a circuit breaker, a dead tank breaker with bushings, a PASS module comprising electrical components housed in a dead tank and equipped with bushings, an instrument transformer, a disconnector, an earthing switch, a combined disconnector and earthing switch, a busbar, a surge arrester, a cable, a part of a substation, a substation, a part of an electrical distribution or transmission line; and wherein the electrical active part comprises at least one non-encapsulated electrical active part, in particular bushing or conductor or bare cable or bare part, which non-encapsulated electrical active part requires during operation insulation by the dielectric insulation medium comprising or being a gas and having a dielectric insulation capability higher than the dielectric insulation capability of air, in particular of dry air.

30. Building (1) according to any of the claims 27 to 29, wherein the room (4; 40-47) is filled with the dielectric insulation medium comprising or being a mixture of air with gaseous fluoroketone having exactly 6 carbon atoms, and the electrical active part (401, 411, 421, ..., 471) comprises a non-encapsulated electrical active part insulated by the dielectric insulation inside the room (4; 40-47) and further comprises an encapsulated component, which is not exposed to the dielectric insulation medium and has inside its encapsulation a gaseous insulation comprising or being a mixture of at least one of air, carbon dioxide and oxygen, in particular carbon dioxide and oxygen, with a gaseous fluoroketone having exactly 5 carbon atoms.

31. Method for operating a building (1) according to any of the claims 27 to 30, in particular for operating a converter building (1) according to any of the claims 1-27, wherein the non-encapsulated electrical active part (401, 411, 421, ..., 471) is maintained in operation, in particular is operated under medium voltage and/or high voltage and/or under heavy current, also during time intervals when the door (402, 412, ..., 472) is opened.

32. Method according to claim 31, wherein refilling means, in particular the injection means (157), attributed to the room (4; 40-47) are activated for refilling the room (4; 40-47) in regular time intervals, and/or by opening and/or closing the door, and/or in a controlled manner using monitoring means (16, 160) attributed to the room (4; 40-47) for monitoring a composition, a concentration, a humidity, a pressure, a density and/or a temperature of the insulation medium and using controlling means (12, 15) attributed to the room (4; 40-47) for controlling a composition, a concentration, a humidity, a pressure, a density and/or a temperature of the insulation medium inside the room (4; 40-47).

33. Method according to any of the claims 31-32, the refilling means being activated manually, in particular during every instance when the door has been opened, or semi-manually, wherein opening and/or closing the door activates the refilling means, in particular wherein the refilling means are arranged close to the at least one non-encapsulated electrical active part (401, 411, 421, ..., 471).

34. Method for providing a building (1) or converter building (1) according to any of the preceding claims 1-30, in particular method according to any of the claims 31-33, the method comprising the consecutive steps of
evacuating an interior space of at least one room (4; 40-47) of the converter building (1),
drying the interior space, until a humidity below a predetermined humidity value is obtained, and
introducing dry air and the dielectric insulation component C1 into the interior space of the room (4; 40-47) such that an insulation medium having a predetermined pressure is obtained.

35. Method according to claim 34, wherein the steps are performed using separate means for each room (4; 40-47) or using the same means for at least a portion of the rooms (4; 40-47), in particular for all rooms (4; 40-47).

36. Use of the converter building (1) according to any of the claims 1 to 27 or of the building (1) according to any of the claims 28 to 30 in a medium and/or high voltage substation comprising non-encapsulated gas-insulated electrical active parts (401, 411, 421, ..., 471), in an HVDC station, in an HVAC station or in an HVAC/HVDC station, in particular in an HVDC onshore or offshore station.

## Patentansprüche

1. Umrichtergebäude (1), aufweisend mindestens einen Raum (4; 40, 41, 42, 43, 44, 45, 46, 47) mit einer festen Raumwand (400, 410, 420, 430, 440, 450, 460, 470), die einen Innenraum und einen elektrisch aktiven Teil (401, 411, 421, 431, 441, 451, 461, 471), der im Innenraum enthalten ist, einschließt, wobei die Raumwand (400, 410, ..., 470) mindestens eine Öffnung (402, 412, 422, 432, 442, 452, 462, 472) aufweist, die so ausgelegt ist, dass sie es einem Menschen ermöglicht, in den Innenraum einzutreten, **dadurch gekennzeichnet, dass** die Öffnung (402, 412, ..., 472) abgedichtet werden kann, die Raumwand (400, 410, ..., 470) den Innenraum gasdicht einschließt, wenn die Öffnung (402, 412, ..., 472) abgedichtet ist, und der Innenraum ein dielektrisches Isoliermedium enthält, das eine andere dielektrische Isolierkomponente C1 als Luft aufweist.

2. Umrichtergebäude (1) nach Anspruch 1, wobei das Umrichtergebäude (1) in einer HVDC-Station, einer HVAC-Station oder einer HVAC/HVDC-Station (1), insbesondere einer Onshore- oder Offshore-HDVC-Station (1), enthalten ist oder eine solche ist.

3. Umrichtergebäude (1) nach einem der vorhergehenden Ansprüche, wobei die Isolierkomponente C1 nicht toxisch ist und in einer derartigen Konzentration vorhanden ist, dass Wartungspersonal den Raum (4; 40-47) betreten kann, indem es insbesondere einen der Schritte ausführt, die ausgewählt sind aus der Gruppe bestehend aus: Entlüften des Raums (4; 40-47) vor dem Eintreten, Fluten des Raums (4; 40-47) mit Luft oder Druckluft oder dergleichen vor dem Betreten des Raums (4; 40-47), Belüften des Raums (4; 40-47), um die im Raum (4; 40-47) vorhandene Konzentration zu homogenisieren, Wählen von ausreichend niedrigen Konzentrationen unter Betriebsbedingungen, Verwenden einer Gasmaske und/oder Kombinationen davon.

4. Umrichtergebäude (1) nach einem der vorhergehenden Ansprüche, wobei eine Tür (402, 412, 422, 432, 442, 452, 462, 472) an der mindestens einen Öffnung angeordnet ist, die Tür (402, 412, ..., 472) in Bezug auf die Öffnung von einem ersten Zustand, in welchem die Öffnung offen ist, in einen zweiten Zustand, in welchem die Tür geschlossen ist, und umgekehrt bewegt, insbesondere gedreht oder verschoben, werden kann, und wobei die Tür (402, 412, ..., 472) insbesondere eine Luftschleusentür oder Drehtür zum Reduzieren von Ausströmen des dielektrischen Isoliermediums ist.

5. Umrichtergebäude (1) nach Anspruch 4, wobei der mindestens einen Öffnung (402, 412, ..., 472) Dichtmittel (403, 413, ..., 473) zum Bereitstellen eines gasdichten Verschlusses zugeordnet sind, und die Dichtmittel (403, 413, ..., 473) zwischen einer Fläche der Raumwand (400, 410, 420, ..., 470) in einer Region, welche die mindestens eine Öffnung umgibt, und einer Fläche der Tür (402, 412, ..., 472) angeordnet sind.

6. Umrichtergebäude (1) nach einem der vorhergehenden Ansprüche, wobei die dielektrische Isolierkomponente C1 bei Betriebsbedingungen mindestens teilweise in der Gasphase ist, wobei das dielektrische Isoliermedium bei Betriebsbedingungen insbesondere gasförmig ist.

7. Umrichtergebäude (1) nach einem der vorhergehenden Ansprüche, wobei die dielektrische Isolierkomponente C1 eine höhere Durchschlagfeldstärke als Luft aufweist.

8. Umrichtergebäude (1) nach einem der vorhergehenden Ansprüche, wobei die dielektrische Isolierkomponente C1 eine Organofluorverbindung ist.

9. Umrichtergebäude (1) nach einem der vorhergehenden Ansprüche, wobei die dielektrische Isolierkomponente C1 ausgewählt ist aus der Gruppe bestehend aus: einem Fluorketon, einem Hydrofluormonoether, einem Perfluorether und Mischungen davon;
wobei das Fluorketon insbesondere 4 bis 12 Kohlenstoffatome, vorzugsweise 5 bis 7 Kohlenstoffatome, vornehmlich genau 5 oder genau 6 Kohlenstoffatome enthält; und/oder wobei der Hydrofluormonether insbesondere mindestens 3 Kohlenstoffatome, vornehmlich genau 3 oder genau 4 Kohlenstoffatome enthält.

10. Umrichtergebäude (1) nach einem der vorhergehenden Ansprüche, wobei das Isoliermedium zusätzlich zu der dielektrischen Isolierkomponente C1 mindestens eine weitere Isolierkomponente C2, ..., Cn aufweist, wobei die weitere Isolierkomponente C2, ..., Cn Luft oder eine Luftkomponente ist und insbesondere ausgewählt ist aus der Gruppe bestehend aus: Stickstoff, Sauerstoff, Kohlendioxid, Edelgasen und Mischungen davon.

11. Umrichtergebäude (1) nach einem der vorhergehenden Ansprüche, wobei das Isoliermedium frei von Schwefelhexafluorid SF, ist, und wobei insbesondere der Innenraum des Raums (4; 40-47) oder jedes Raums (4; 40-47) frei von SF₆ ist.

12. Umrichtergebäude (1) nach einem der vorhergehenden Ansprüche, wobei der elektrisch aktive Teil (401, 411, 421, ..., 471) ein elektrisch aktiver Mittelspannungs- und/oder Hochspannungs- und/oder Starkstromteil, insbesondere ein elektrischer Hochspannungsteil über 72 kV ist.

13. Umrichtergebäude (1) nach einem der vorhergehenden Ansprüche, wobei mindestens einer des mindestens einen elektrisch aktiven Teils (401, 411, 421, ..., 471) nicht gekapselt ist, wobei der nicht gekapselte elektrisch aktive Teil insbesondere in Betrieb ist und während des Betriebs eine dielektrische Gasisolierung mit einer dielektrischen Isolierfähigkeit benötigt, die höher als die dielektrische Isolierfähigkeit von Luft, insbesondere trockener Luft ist.

14. Umrichtergebäude (1) nach einem der vorhergehenden Ansprüche, wobei der mindestens eine Raum (4; 40-47) ausgewählt ist aus der Gruppe bestehend aus: einer Ventilhalle (40, 43) mit Ventilhallenwänden (400, 430), einer Ventilhallenöffnung (402, 432) und Leistungshalbleiterventilen (401, 431); einer Reaktorhalle (41) mit Reaktorhallenwänden (410), einer Reaktorhallenöffnung (412) und einem Reaktor (411); einer DC-Halle (42) mit DC-Hallenwänden (420), einer DC-Hallenöffnung (422) und elektrisch aktiven DC-Teilen (421); einer GIS-Halle (44) mit GIS-Hallenwänden (440), einer GIS-Hallenöffnung (442) und gasisolierten Schaltanlagen (441); einer Kabelhalle (45) mit Kabelhallenwänden (450), einer Kabelhallenöffnung (452) und elektrischen Kabeln (451); einer Transformatorhalle (46) mit Transformatorhallenwänden (460), einer Transformatorhallenöffnung (462) und Transformatoren (461); einer Ableiterhalle (47) mit Ableiterhallenwänden (470), einer Ableiterhallenöffnung (472) und Ableitern (471).

15. Umrichtergebäude (1) nach Anspruch 14, wobei die Ventilhalle (40, 43) von der Ventilhallenwand (400, 430), welche die Ventilhallenöffnung (402, 432) aufweist, eingeschlossen wird, die Ventilhalle (40, 43) mindestens einen Teil der Leistungshalbleiterventile (401, 431), insbesondere IGBTs und/oder Thyristoren, des Umrichtergehäuses (1) als elektrisch aktiven Teil (401, 411, 421, ..., 471) aufweist, und das dielektrische Isoliermedium in mindestens einem Teil der Ventilhalle (40, 43) vorhanden ist und die dielektrische Isolierkomponente C1 aufweist; wobei die Ventilhalle (40, 43) insbesondere in getrennte Abteilungen unterteilt ist, mindestens eine der Abteilungen gasdicht ist und ihr Innenraum das dielektrische Isoliermedium enthält, das die dielektrische Isolierkomponente C1 aufweist.

16. Umrichtergebäude (1) nach einem der Ansprüche 14 bis 15, wobei das Umrichtergebäude (1) eine DC-Halle (42) ist oder enthält, die von einer DC-Hallenwand (420), welche die DC-Hallenöffnung (422) aufweist, eingeschlossen wird und mindestens einen elektrisch aktiven DC-Teil (421) enthält, der ausgewählt ist aus der Gruppe bestehend aus: Trennschaltern, Leistungsschaltern, Umschaltern, DC-Filtern, und das dielektrische Isoliermedium, das in mindestens einem Teil der DC-Halle (42) vorhanden ist, und die dielektrische Isolierkomponente C1 aufweist.

17. Umrichtergebäude (1) nach einem der vorhergehenden Ansprüche, wobei der Druck des Isoliermediums mindestens ungefähr 1 bar beträgt und vorzugsweise einen leichten Überdruck über 1 bar aufweist.

18. Umrichtergebäude (1) nach einem der vorhergehenden Ansprüche, wobei die mindestens eine Öffnung (402, 412, 422, ..., 512) Zugang zu einem gekapselten elektrisch aktiven Teil (441, 501), insbesondere einer gekapselten Schaltanlage (441, 501), gewährt, und wobei es sich bei der dielektrischen Isolierkomponente C1 um eine andere als Schwefelhexafluorid SF₆ handelt, und das dielektrische Isoliermedium insbesondere Luft oder eine Luftkomponente aufweist.

19. Umrichtergebäude (1) nach einem der vorhergehenden Ansprüche, wobei dem mindestens einen Raum (4; 40-47) zur Kühlung seiner Wände (40; 400-470) und/oder seines Innenraums Kühlmittel (171) insbesondere zur Zwangskondensation mindestens einer der dielektrischen Komponenten C1 ... Cn zugeordnet sind.

20. Umrichtergebäude (1) nach Anspruch 19, wobei ein nichtwässriges Kühlmedium in den Kühlmitteln (171) verwendet wird; wobei die dielektrische Isolierkomponente C1 insbesondere als das Kühlmedium, insbesondere die Kühlflüssigkeit oder das Arbeitsmedium in einem Heizrohrsystem verwendet wird.

21. Umrichtergebäude (1) nach einem der vorhergehenden Ansprüche, wobei der mindestens eine Raum (4; 40-47) ein Gebläse (140) zum homogenen Verteilen des dielektrischen Isoliermediums, insbesondere der mindestens einen Isolierkomponente C1, C2, ..., Cn, im Innenraum des Raums (4; 40-47) aufweist; und/oder wobei dem Raum (4; 40-47) Umwälzmittel (14) zum Umwälzen des dielektrischen Isoliermediums zugeordnet sind, wobei die Umwälzmittel (14) Mittel (141) zum Reinigen des Isoliermediums von Verunreinigungen, insbesondere von Wasser und/oder Produkten, die durch die Reaktion des Isoliermediums mit Wasser gebildet werden, aufweisen.

22. Umrichtergebäude (1) nach einem der vorhergehenden Ansprüche, wobei das Umrichtergebäude (1) für mindestens eine Isolierkomponente C1, C2, ..., Cn des Isoliermediums ferner einen Füllbehälter (155) zum Speichern der dielektrischen Isolierkomponente aufweist, wobei der Füllbehälter (155) insbesondere mit Injektionsmitteln (157) zum Injizieren der dielektrischen Isolierkomponente in den Innenraum des Raums (4; 40-47) verbunden ist.

23. Umrichtergebäude (1) nach einem der vorhergehenden Ansprüche, wobei der Raum (4; 40-47) ein Entwässerungssystem (17) zum Sammeln und Entfernen von flüssiger Substanz aufweist, die im Innenraum des Raums (4; 40-47) enthalten ist, wobei das Entwässerungssystem (17) gegebenenfalls Mittel (170, 171, 172, 173) zum Leiten der flüssigen Substanz oder eines Teils davon in einen Wiedergewinnungsbehälter (174) aufweist.

24. Umrichtergebäude (1) nach einem der vorhergehenden Ansprüche, wobei das Umrichtergebäude (1) ferner Mittel zum Abbauen des Isoliermediums zu einer umweltfreundlichen Substanz aufweist.

25. Umrichtergebäude (1) nach einem der vorhergehenden Ansprüche, wobei der Raum (4; 40-47) Überwachungsmittel (16, 160) zum Überwachen einer Zusammensetzung, einer Konzentration, einer Feuchtigkeit, eines Drucks, einer Dichte und/oder einer Temperatur des Isoliermediums und Steuermittel (12, 15) zum Steuern einer Zusammensetzung, einer Konzentration, einer Feuchtigkeit, eines Drucks, einer Dichte und/oder einer Temperatur des Isoliermediums aufweist.

26. Umrichtergebäude (1) nach einem der vorhergehenden Ansprüche, wobei es ferner einen Gaszwischenspeicherraum (48) zum vorübergehenden Speichern des dielektrischen Isoliermediums aufweist.

27. Umrichtergebäude (1) nach einem der vorhergehenden Ansprüche, wobei das Umrichtergebäude (1) eine Mittel- und/oder Hochspannungs-Unterstation aufweist, welche nicht gekapselte gasisolierte elektrisch aktive Teile (401, 411, 421, ..., 471) aufweist, oder darin enthalten ist.

28. Gebäude (1), insbesondere Umrichtergebäude (1), wobei das Gebäude (1) mindestens einen Raum (4; 40-47) mit einer festen Raumwand (400, 410, 420, ..., 470) aufweist, die einen Innenraum und mindestens einen elektrisch aktiven Teil (401, 411, 421, ..., 471), der im Innenraum enthalten ist, einschließt, wobei die Raumwand (400, 410, ..., 470) mindestens eine Öffnung (402, 412, ..., 472) aufweist, die so ausgelegt ist, dass sie es einem Menschen ermöglicht, in den Innenraum einzutreten, wobei ferner der elektrisch aktive Teil mindestens einen nicht gekapselten elektrisch aktiven Teil aufweist, der unter Mittelspannung und/oder Hochspannung betrieben wird,
**dadurch gekennzeichnet, dass** die Öffnung (402, 412, ..., 472) abgedichtet werden kann, die Raumwand (400, 410, ..., 470) den Innenraum gasdicht einschließt, wenn die Öffnung (402, 412, ..., 472) abgedichtet ist, und der Innenraum ein dielektrisches Isoliermedium enthält, das eine andere dielektrische Isolierkomponente C1 als Luft aufweist.

29. Gebäude (1) nach einem der Ansprüche 27 bis 28, wobei der elektrisch aktive Teil ausgewählt ist aus der Gruppe bestehend aus: einem Generator, einem Transformator, einem Leistungsschalter, einem Kesselleistungsschalter mit Durchführungen, einem PASS-Modul mit elektrischen Komponenten, das in einem Kessel untergebracht und mit Durchführungen ausgestattet ist, einem Messwandler, einem Trennschalter, einem Erdungsschalter, einer Kombination aus Trennschalter und Erdungsschalter, einer Sammelschiene, einem Überspannungsableiter, einem Kabel, einem Teil einer Unterstation, einer Unterstation, einem Teil einer elektrischen Verteilungs- oder Übertragungsleitung; und wobei der elektrisch aktive Teil mindestens einen nicht gekapselten elektrisch aktiven Teil, insbesondere eine nicht gekapselte Durchführung oder Leitung oder ein blankes Kabel oder einen blanken Teil, aufweist, wobei der nicht gekapselte elektrisch aktive Teil während des Betriebs Isolierung durch das dielektrische Isoliermedium benötigt, das ein Gas aufweist oder ist und eine dielektrische Isolierfähigkeit aufweist, die höher als die dielektrische Isolierfähigkeit von Luft, insbesondere trockener Luft ist.

30. Gebäude (1) nach einem der Ansprüche 27 bis 29, wobei der Raum (4; 40-47) mit dem dielektrischen Isoliermedium gefüllt ist, das ein Gemisch von Luft mit gasförmigem Fluorketon mit genau 6 Kohlenstoffen aufweist oder ist, und der elektrisch aktive Teil (401, 411, 421, ..., 471) einen nicht gekapselten elektrisch aktiven Teil aufweist, der durch die dielektrische Isolierung innerhalb des Raums (4; 40-47) isoliert wird, und ferner eine gekapselte Komponente aufweist, die nicht dem dielektrischen Isoliermedium ausgesetzt ist und innerhalb ihrer Kapselung eine gasförmige Isolierung aufweist, die ein Gemisch von mindestens einem von Luft, Kohlendioxid und Sauerstoff, insbesondere Kohlendioxid und Sauerstoff, mit einem gasförmigen Fluorketon mit genau 5 Kohlenstoffatomen aufweist oder ist.

31. Verfahren zum Betreiben eines Gebäudes (1) nach einem der Ansprüche 27 bis 30, insbesondere zum Betreiben eines Umrichtergebäudes (1) nach einem der Ansprüche 1 bis 27, wobei der nicht gekapselte elektrisch aktive Teil (401, 411, 421, ..., 471) auch in Zeitintervallen, in welchen die Tür (402, 412, ..., 472) geöffnet wird, in Betrieb gehalten wird, insbesondere unter Mittelspannung und/oder Hochspannung und/oder unter Starkstrom betrieben wird.

32. Verfahren nach Anspruch 31, wobei Nachfüllmittel, insbesondere die dem Raum (4; 40-47) zugeordneten Injektionsmittel (157), zum Nachfüllen des Raums (4; 40-47) in regelmäßigen Zeitintervallen und/oder durch Öffnen und/oder Schließen der Tür und/oder in einer kontrollierten Weise unter Verwendung von dem Raum (4; 40-47) zugeordneten Überwachungsmitteln (16, 60) zum Überwachen einer Zusammensetzung, einer Konzentration, einer Feuchtigkeit, eines Drucks, einer Dichte und/oder einer Temperatur des Isoliermediums und unter Verwendung von dem Raum (4; 40-47) zugeordneten Steuermitteln (12, 15) zum Steuern einer Zusammensetzung, einer Konzentration, einer Feuchtigkeit, eines Drucks, einer Dichte und/oder einer Temperatur des Isoliermediums innerhalb des Raums (4; 40-47) aktiviert werden.

33. Verfahren nach einem der Ansprüche 31 bis 32, wobei die Nachfüllmittel insbesondere zu jedem Zeitpunkt, zu dem sich die Tür geöffnet hat, manuell oder halbmanuell aktiviert werden, wobei das Öffnen und/oder Schließen der Tür die Nachfüllmittel aktiviert, wobei die Nachfüllmittel insbesondere in der Nähe des mindestens einen nicht gekapselten elektrisch aktiven Teils (401, 411, 421, ..., 471) angeordnet sind.

34. Verfahren zum Bereitstellen eines Gebäudes (1) oder Umrichtergebäudes (1) nach einem der Ansprüche 1 bis 30, insbesondere Verfahren nach einem der Ansprüche 31 bis 33, wobei das Verfahren die folgenden aufeinanderfolgenden Schritte aufweist:
Entlüften eines Innenraums mindestens einen Raums (4; 40-47) des Umrichtergebäudes (1),
Trocknen des Innenraums, bis eine Feuchtigkeit unter einem vorbestimmten Feuchtigkeitswert erhalten wird, und
derartiges Einführen von trockener Luft und der dielektrischen Isolierkomponente C1 in den Innenraum des Raums (4; 40-47), dass ein Isoliermedium mit einem vorbestimmten Druck erhalten wird.

35. Verfahren nach Anspruch 34, wobei die Schritte unter Verwendung von separaten Mitteln für jeden Raum (4; 40-47) oder unter Verwendung der gleichen Mittel für mindestens einen Teil der Räume (4; 40-47), insbesondere für alle Räume (4; 40-47), ausgeführt werden.

36. Verwendung des Umrichtergebäudes (1) nach einem der Ansprüche 1 bis 27 oder des Gebäudes (1) nach einem der Ansprüche 28 bis 30 in einer Mittel- und/oder Hochspannungs-Unterstation, die nicht gekapselte gasisolierte elektrisch aktive Teile (401, 411, 421, ..., 471) aufweist, in einer HVDC-Station, in einer HVAC-Station oder in einer HVAC/HVDC-Station, insbesondere in einer Onshore- oder Offshore-HVDC-Station.

## Revendications

1. Bâtiment (1) de convertisseurs comportant au moins un local (4; 40, 41, 42, 43, 44, 45, 46, 47) doté d'une paroi pleine (400, 410, 420, 430, 440, 450, 460, 470) de local délimitant un espace intérieur et d'une partie active électrique (401, 411, 421, 431, 441, 451, 461, 471) contenue dans ledit espace intérieur, la paroi (400, 410,..., 470) de local présentant au moins une ouverture (402, 412, 422, 432, 442, 452, 462, 472), qui est conçue de façon à permettre à un être humain d'entrer dans l'espace intérieur, **caractérisé en ce que** l'ouverture (402, 412,..., 472) peut être obturée, **en ce que** la paroi (400, 410,..., 470) de local délimite l'espace intérieur de manière étanche aux gaz lorsque l'ouverture (402, 412,..., 472) est obturée, et **en ce que** l'espace intérieur contient un milieu d'isolation diélectrique, comportant un composant C1 d'isolation diélectrique autre que l'air.

2. Bâtiment (1) de convertisseurs selon la revendication 1, le bâtiment (1) de convertisseurs étant compris dans ou étant un poste HT à courant continu, un poste HT à courant alternatif ou un poste HT (1) à courant alternatif/continu, en particulier un poste HT (1) à courant continu à terre ou en mer.

3. Bâtiment (1) de convertisseurs selon l'une quelconque des revendications précédentes, le composant d'isolation C1 étant non toxique et étant présent dans des concentrations telles que du personnel de maintenance peut entrer dans le local (4; 40-47), en particulier en effectuant une des étapes choisies dans le groupe constitué des actions consistant à: établir un vide dans le local (4; 40-47) avant d'entrer, noyer le local (4; 40-47) avec de l'air ou de l'air comprimé ou similaire avant d'entrer dans le local (4; 40-47), ventiler le local (4; 40-47) pour homogénéiser la concentration présente dans le local (4; 40-47), choisir des concentrations suffisamment faibles en conditions d'exploitation, utiliser un masque à gaz, et/ou des combinaisons de celles-ci.

4. Bâtiment (1) de convertisseurs selon l'une quelconque des revendications précédentes, une porte (402, 412, 422, 432, 442, 452, 462, 472) étant disposée au niveau de l'ouverture ou des ouvertures, la porte (402, 412,..., 472) pouvant être déplacée, en particulier par pivotement ou translation, par rapport à l'ouverture d'un premier état dans lequel l'ouverture est ouverte à un deuxième état dans lequel l'ouverture est fermée, et vice versa, et en particulier la porte (402, 412,..., 472) étant une porte avec sas ou une porte à tambour pour réduire l'échappement du milieu d'isolation diélectrique.

5. Bâtiment (1) de convertisseurs selon la revendication 4, des moyens (403, 413,..., 473) d'étanchéité étant attribués à l'ouverture ou aux ouvertures (402, 412,..., 472) pour assurer une fermeture étanche aux gaz et les moyens (403, 413,..., 473) d'étanchéité étant disposés entre une surface de la paroi de local (400, 410, 420,..., 470) dans une région entourant l'ouverture ou les ouvertures et une surface de la porte (402, 412,..., 472).

6. Bâtiment (1) de convertisseurs selon l'une quelconque des revendications précédentes, le composant C1 d'isolation diélectrique se trouvant au moins partiellement en phase gazeuse en conditions opérationnelles, en particulier le milieu d'isolation diélectrique étant gazeux en conditions opérationnelles.

7. Bâtiment (1) de convertisseurs selon l'une quelconque des revendications précédentes, le composant C1 d'isolation diélectrique présentant une intensité de champ de claquage supérieure à celle de l'air.

8. Bâtiment (1) de convertisseurs selon l'une quelconque des revendications précédentes, le composant C1 d'isolation diélectrique étant un composé organofluoré.

9. Bâtiment (1) de convertisseurs selon l'une quelconque des revendications précédentes, le composant C1 d'isolation diélectrique étant choisi dans le groupe constitué: d'une fluorocétone, d'un hydrofluoro monoéther, d'un perfluoroéther et de mélanges de ceux-ci;
la fluorocétone contenant en particulier de 4 à 12 atomes de carbone, de préférence de 5 à 7 atomes de carbone, idéalement exactement 5 ou exactement 6 atomes de carbone; et/ou l'hydrofluoro monoéther contenant en particulier au moins 3 atomes de carbone, en particulier exactement 3 ou exactement 4 atomes de carbone.

10. Bâtiment (1) de convertisseurs selon l'une quelconque des revendications précédentes, le milieu d'isolation comportant en plus du composant C1 d'isolation diélectrique au moins un composant supplémentaire C2,..., Cn d'isolation, ledit composant supplémentaire C2,..., Cn d'isolation étant de l'air ou un composant de l'air, en particulier choisi dans le groupe constitué: de l'azote, de l'oxygène, du dioxyde de carbone, des gaz nobles et de mélanges de ceux-ci.

11. Bâtiment (1) de convertisseurs selon l'une quelconque des revendications précédentes, le milieu d'isolation étant exempt de hexafluorure de soufre SF₆, et en particulier l'espace intérieur du local (4; 40-47) ou de chaque local (4; 40-47) étant exempt de SF₆.

12. Bâtiment (1) de convertisseurs selon l'une quelconque des revendications précédentes, la partie active électrique (401, 411, 421,..., 471) étant une partie active électrique à moyenne tension et/ou à haute tension et/ou à courant fort, en particulier étant une partie électrique à haute tension supérieure à 72 kV.

13. Bâtiment (1) de convertisseurs selon l'une quelconque des revendications précédentes, au moins une de la ou des parties actives électriques (401, 411, 421,..., 471) étant non encapsulée, en particulier la partie active électrique non encapsulée étant en fonctionnement et nécessitant pendant le fonctionnement une isolation diélectrique par un gaz d'une capacité d'isolation diélectrique supérieure à la capacité d'isolation diélectrique de l'air, en particulier de l'air sec.

14. Bâtiment (1) de convertisseurs selon l'une quelconque des revendications précédentes, le local ou les locaux (4; 40-47) étant choisis dans le groupe constitué: d'une salle (40, 43) des valves dotée de parois (400, 430) de salle des valves, d'une ouverture (402, 432) de salle des valves et de valves (401, 431) à semi-conducteurs de puissance; d'une salle (41) d'inductance dotée de parois (410) de salle d'inductance, d'une ouverture (412) de salle d'inductance et d'une inductance (411); d'une salle (42) à courant continu dotée de parois (420) de salle à courant continu, d'une ouverture (422) de salle à courant continu et de parties actives électriques (421) à courant continu; d'une salle (44) des GIS dotée de parois (440) de salle des GIS, d'une ouverture (442) de salle des GIS et d'appareillages (441) à isolation gazeuse; d'une salle (45) des câbles dotée de parois (450) de salle des câbles, une ouverture (452) de salle des câbles et de câbles électriques (451); d'une salle (46) des transformateurs dotée de parois (460) de salle des transformateurs, d'une ouverture (462) de salle des transformateurs et de transformateurs (461); d'une salle (47) des parafoudres dotée de parois (470) de salle des parafoudres, d'une ouverture (472) de salle des parafoudres et de parafoudres (471).

15. Bâtiment (1) de convertisseurs selon la revendication 14, la salle (40, 43) des valves étant délimitée par la paroi (400, 430) de salle des valves dotée de l'ouverture (402, 432) de salle des valves, ladite salle (40, 43) des valves comportant au moins une partie des valves (401, 431) à semi-conducteurs de puissance, en particulier des IGBT et/ou des thyristors, du bâtiment (1) de convertisseurs en tant que partie active électrique (401, 411, 421,..., 471), et le milieu d'isolation diélectrique étant présent dans au moins une partie de la salle (40, 43) des valves et comportant le composant C1 d'isolation diélectrique; la salle (40, 43) des valves étant en particulier subdivisée en compartiments distincts, au moins un des compartiments étant étanche aux gaz et son espace intérieur contenant le milieu d'isolation diélectrique comportant le composant C1 d'isolation diélectrique.

16. Bâtiment (1) de convertisseurs selon l'une quelconque des revendications 14 à 15, le bâtiment (1) de convertisseurs étant ou contenant une salle (42) à courant continu qui est délimitée par une paroi (420) de salle à courant continu dotée de l'ouverture (422) de salle à courant continu et contenant au moins une partie active électrique (421) à courant continu choisie dans le groupe constitué de: sectionneurs, disjoncteurs, interrupteurs, filtres à courant continu, et le milieu d'isolation diélectrique étant présent dans au moins une partie de la salle (42) à courant continu et comportant le composant C1 d'isolation diélectrique.

17. Bâtiment (1) de convertisseurs selon l'une quelconque des revendications précédentes, la pression du milieu d'isolation étant au moins d'approximativement 1 bar et comprenant de préférence une légère surpression au-dessus de 1 bar.

18. Bâtiment (1) de convertisseurs selon l'une quelconque des revendications précédentes, l'ouverture ou les ouvertures (402, 412, 422,..., 512) donnant accès à une partie électriquement active encapsulée (441, 501), en particulier un appareillage encapsulé (441, 501), et le composant C1 d'isolation diélectrique étant autre que de l'hexafluorure de soufre SF₆, et en particulier le milieu d'isolation diélectrique comportant de l'air ou un composant de l'air.

19. Bâtiment (1) de convertisseurs selon l'une quelconque des revendications précédentes, des moyens (171) de refroidissement, en particulier de condensation forcée d'au moins un des composants diélectriques C1... Cn, étant attribués au local ou aux locaux (4; 40-47) pour en refroidir les parois (40; 400-470) et/ou l'espace intérieur.

20. Bâtiment (1) de convertisseurs selon la revendication 19, un milieu de refroidissement non aqueux étant utilisé dans les moyens (171) de refroidissement; le composant C1 d'isolation diélectrique étant en particulier utilisé comme milieu de refroidissement, en particulier comme liquide de refroidissement ou milieu de travail dans un système à caloducs.

21. Bâtiment (1) de convertisseurs selon l'une quelconque des revendications précédentes, le local ou les locaux (4; 40-47) comportant un ventilateur (140) servant à répartir de façon homogène le milieu d'isolation diélectrique, en particulier le ou les composants C1, C2,..., Cn d'isolation, dans l'espace intérieur du local (4; 40-47); et/ou
des moyens (14) de circulation étant attribués au local (4; 40-47) pour faire circuler le milieu d'isolation diélectrique, lesdits moyens (14) de circulation comportant des moyens (141) servant à épurer le milieu d'isolation d'impuretés, en particulier d'eau et/ou de produits formés par la réaction du milieu d'isolation avec de l'eau.

22. Bâtiment (1) de convertisseurs selon l'une quelconque des revendications précédentes, le bâtiment (1) de convertisseurs comportant en outre, pour au moins un composant C1, C2,..., Cn d'isolation du milieu d'isolation, un réservoir (155) de remplissage servant à stocker ledit composant d'isolation diélectrique, le réservoir (155) de remplissage étant en particulier relié à des moyens (157) d'injection servant à injecter le composant d'isolation diélectrique dans l'espace intérieur du local (4; 40-47).

23. Bâtiment (1) de convertisseurs selon l'une quelconque des revendications précédentes, le local (4; 40-47) comportant un système (17) de vidange servant à recueillir et à évacuer une substance liquide contenue dans l'espace intérieur du local (4; 40-47), ledit système (17) de vidange comportant éventuellement des moyens (170, 171, 172, 173) servant à diriger la substance liquide ou une fraction de celle-ci vers un réservoir (174) de récupération.

24. Bâtiment (1) de convertisseurs selon l'une quelconque des revendications précédentes, le bâtiment (1) de convertisseurs comportant en outre des moyens servant à décomposer le milieu d'isolation en une substance inoffensive pour l'environnement.

25. Bâtiment (1) de convertisseurs selon l'une quelconque des revendications précédentes, le local (4; 40-47) comportant des moyens (16, 160) de surveillance servant à surveiller une composition, une concentration, une humidité, une pression, une densité et/ou une température du milieu d'isolation et des moyens (12, 15) de régulation servant à réguler une composition, une concentration, une humidité, une pression, une densité et/ou une température du milieu d'isolation.

26. Bâtiment (1) de convertisseurs selon l'une quelconque des revendications précédentes, celui-ci comportant en outre un local intermédiaire (48) de stockage de gaz servant à stocker temporairement le milieu d'isolation diélectrique.

27. Bâtiment (1) de convertisseurs selon l'une quelconque des revendications précédentes, le bâtiment (1) de convertisseurs comprenant, étant ou étant compris dans une sous-station à moyenne et/ou haute tension comportant des parties actives électriques (401, 411, 421,..., 471) non encapsulées à isolation gazeuse.

28. Bâtiment (1), en particulier bâtiment (1) de convertisseurs, le bâtiment (1) comportant au moins un local (4; 40-47) doté d'une paroi pleine (400, 410, 420,..., 470) de local délimitant un espace intérieur et d'au moins une partie active électrique (401, 411, 421,..., 471) contenue dans ledit espace intérieur, la paroi (400, 410,..., 470) de local présentant au moins une ouverture (402, 412,..., 472), qui est conçue de façon à permettre à un être humain d'entrer dans l'espace intérieur, la partie active électrique comportant en outre au moins une partie active électrique non encapsulée qui est exploitée sous moyenne tension et/ou haute tension, **caractérisé en ce que** l'ouverture (402, 412,..., 472) peut être obturée, **en ce que** la paroi (400, 410,..., 470) de local délimite l'espace intérieur de manière étanche aux gaz lorsque l'ouverture (402, 412,..., 472) est obturée, et **en ce que** l'espace intérieur contient un milieu d'isolation diélectrique comportant un composant C1 d'isolation diélectrique autre que l'air.

29. Bâtiment (1) selon l'une quelconque des revendications 27 à 28, la partie active électrique étant choisie dans le groupe constitué: d'un générateur, d'un transformateur, d'un disjoncteur, d'un disjoncteur à cuve mise à la terre avec traversées, d'un module PASS comportant des composants électriques logés dans une cuve mise à la terre et équipé de traversées, d'un transformateur de mesure, d'un sectionneur, d'un interrupteur de mise à la terre, d'un sectionneur et un interrupteur de mise à la terre combinés, d'une barre omnibus, d'un parafoudre, d'un câble, d'une partie d'une sous-station, d'une sous-station, d'une partie d'une ligne de distribution ou de transmission électrique; et la partie active électrique comportant au moins une partie active électrique non encapsulée, en particulier une traversée, un conducteur, un câble nu ou une partie nue, ladite partie active électrique non encapsulée nécessitant en cours de fonctionnement une isolation par le milieu d'isolation diélectrique, celui-ci comportant ou étant un gaz et présentant une capacité d'isolation diélectrique supérieure à la capacité d'isolation diélectrique de l'air, en particulier de l'air sec.

30. Bâtiment (1) selon l'une quelconque des revendications 27 à 29, le local (4; 40-47) étant rempli du milieu d'isolation diélectrique comportant ou étant un mélange d'air avec une fluorocétone gazeuse comprenant exactement 6 atomes de carbone, et la partie active électrique (401, 411, 421,..., 471) comportant une partie active électrique non encapsulée isolée par l'isolation diélectrique à l'intérieur du local (4; 40-47) et comportant en outre un composant encapsulé, qui n'est pas exposé au milieu d'isolation diélectrique et est doté, à l'intérieur de son encapsulation, d'une isolation gazeuse comportant ou étant un mélange d'au moins un constituant parmi l'air, le dioxyde de carbone et l'oxygène, en particulier le dioxyde de carbone et l'oxygène, avec une fluorocétone gazeuse comprenant exactement 5 atomes de carbone.

31. Procédé d'exploitation d'un bâtiment (1) selon l'une quelconque des revendications 27 à 30, en particulier pour exploiter un bâtiment (1) de convertisseurs selon l'une quelconque des revendications 1 à 27, la partie active électrique non encapsulée (401, 411, 421,..., 471) étant maintenue en fonctionnement, étant en particulier exploitée sous moyenne tension et/ou haute tension et/ou sous courant fort, également pendant des intervalles de temps où la porte (402, 412,..., 472) est ouverte.

32. Procédé selon la revendication 31, des moyens de réapprovisionnement, en particulier les moyens (157) d'injection, attribués au local (4; 40-47) étant activés pour réapprovisionner le local (4; 40-47) à intervalles de temps réguliers, et/ou en ouvrant et/ou fermant la porte, et/ou de manière commandée à l'aide de moyens (16, 160) de surveillance attribués au local (4; 40-47) pour surveiller une composition, une concentration, une humidité, une pression, une densité et/ou une température du milieu d'isolation et à l'aide de moyens (12, 15) de régulation attribués au local (4; 40-47) pour réguler une composition, une concentration, une humidité, une pression, une densité et/ou une température du milieu d'isolation à l'intérieur du local (4; 40-47).

33. Procédé selon l'une quelconque des revendications 31 à 32, les moyens de réapprovisionnement étant activés manuellement, en particulier chaque fois que la porte a été ouverte, ou semi-manuellement, l'ouverture et/ou la fermeture de la porte activant les moyens de réapprovisionnement, les moyens de réapprovisionnement étant en particulier disposés près de la ou des parties actives électriques non encapsulées (401, 411, 421,..., 471).

34. Procédé de mise en place d'un bâtiment (1) ou d'un bâtiment (1) de convertisseurs selon l'une quelconque des revendications 1 à 30 précédentes, en particulier procédé selon l'une quelconque des revendications 31 à 33, le procédé comportant les étapes consécutives consistant à établir un vide dans un espace intérieur d'au moins un local (4; 40-47) du bâtiment (1) de convertisseurs, assécher l'espace intérieur, jusqu'à ce qu'une humidité inférieure à une valeur d'humidité prédéterminée soit obtenue, et
introduire de l'air sec et le composant C1 d'isolation diélectrique dans l'espace intérieur du local (4; 40-47) de façon à obtenir un milieu d'isolation se trouvant à une pression prédéterminée.

35. Procédé selon la revendication 34, les étapes étant réalisées en utilisant des moyens distincts pour chaque local (4; 40-47) ou en utilisant les mêmes moyens pour au moins une partie des locaux (4; 40-47), en particulier pour tous les locaux (4; 40-47).

36. Utilisation du bâtiment (1) de convertisseurs selon l'une quelconque des revendications 1 à 27 ou du bâtiment (1) selon l'une quelconque des revendications 28 à 30 dans une sous-station à moyenne et/ou haute tension comportant des parties actives électriques (401, 411, 421,..., 471) non encapsulées à isolation gazeuse, dans un poste HT à courant continu, dans un poste HT à courant alternatif ou dans un poste HT à courant alternatif/continu, en particulier dans un poste HT à courant continu à terre ou en mer.
